# EUROPEAN PATENT APPLICATION

(11) **EP 4 224 783 A1**
(43) Date of publication of application: **09.08.2023**
(21) Application number: 20956266.9
(22) Date of filing: 30.09.2020
(51) Int. Cl.: H04L 9/32, G06F 21/64

(54) **INFORMATION PROCESSING METHOD, INFORMATION PROCESSING PROGRAM, AND INFORMATION PROCESSING DEVICE**

(71) Applicant: FUJITSU LIMITED, Kawasaki-shi, Kanagawa 211-8588 (JP)
(72) Inventor: OGURI, Hidenobu, Kawasaki-shi, Kanagawa 211-8588 (JP); ITOH, Kouichi, Kawasaki-shi, Kanagawa 211-8588 (JP)
(74) Representative: Hoffmann Eitle
(86) International application number: PCT/JP2020/037242
(87) International publication number: WO 2022/070338

(57) **Abstract**

An information processing device (200) obtains a first evaluation value for an evaluation item related to reliability corresponding to a combined signature (G1) and a second evaluation value for an evaluation item related to the reliability corresponding to a signature (S1). The information processing device (200) determines whether the obtained first evaluation value and the obtained second evaluation value differ from each other. In a case where the information processing device (200) determines that the evaluation values differ from each other, the information processing device (200) determines whether the type of the evaluation item is an item of data trust or an item of social trust. In a case where the information processing device (200) determines that the evaluation item is an item of the data trust, the information processing device (200) executes control of changing the first evaluation value corresponding to a combined signature present in a higher tier using the second evaluation value corresponding to a signature present in a lower tier. In a case where the information processing device (200) determines that the evaluation item is an item of the social trust, the information processing device (200) executes control of changing the second evaluation value corresponding to a signature present in a lower tier using the first evaluation value corresponding to the combined signature present in the higher tier.

## Description

### TECHNICAL FIELD

The present invention relates to an information processing method, an information processing program, and an information processing device.

### BACKGROUND ART

Conventionally an electronic signature ensuring the reliability of data may be attached to the data to prevent falsification of the data. The signature ensures that, for example, the data is not falsified. According to a technique called "aggregate signature", multiple signatures attached, respectively, to different pieces of data are aggregated into one single signature.

For example, according to a technique of a prior art, a workflow (WF)-type signature is generated by combining multiple signatures with each other.

Patent Document 1: U.S. Laid-Open Patent Publication No. 2010/0287377

### DISCLOSURE OF INVENTION

### PROBLEM TO BE SOLVED BY THE INVENTION

With the prior arts, however, it may be difficult to verify the reliability of data. For example, with the single signature aggregating therein multiple signatures, information regarding the authentication agency used by each signature of the multiple signatures, and the like are lost and it is difficult for a verifier to verify the reliability of data by only referring to the single signature that aggregates therein the multiple signatures.

In one aspect, an object of the present invention is to facilitate verification of the reliability of data.

### MEANS FOR SOLVING PROBLEM

According to an embodiment, an information processing method, an information processing program, and an information processing device are proposed that obtain a first evaluation value for an evaluation item related to the reliability corresponding to a combined signature that is obtained by aggregating therein multiple signatures and a second evaluation value for an evaluation item related to the reliability corresponding to any one signature of the multiple signatures and that execute, in a case where the obtained first evaluation value and the obtained second evaluation value differ from each other, control of changing the second evaluation value using the first evaluation value or changing the first evaluation value using the second evaluation value, according to the hierarchical relation between the combined signatures and the one signature, based on the type of the evaluation item.

### EFFECT OF THE INVENTION

According to one aspect, facilitation of verification of the reliability of data is enabled.

### BRIEF DESCRIPTION OF DRAWINGS

Fig. 1 is an explanatory diagram depicting one example of an information processing method according to an embodiment.
Fig. 2 is an explanatory diagram depicting an example of the information processing method according to the embodiment.
Fig. 3 is an explanatory diagram depicting one example of a reliability management system 300.
Fig. 4 is a block diagram of an example of a hardware configuration of an information processing device 200.
Fig. 5 is an explanatory diagram depicting one example of data having a signature attached thereto.
Fig. 6 is an explanatory diagram depicting one example of a definition of an evaluation item.
Fig. 7 is an explanatory diagram depicting one example of the definition of the evaluation item.
Fig. 8 is an explanatory diagram depicting one example of an evaluation criteria table 800.
Fig. 9 is an explanatory diagram depicting one example of a WF hierarchy table 900.
Fig. 10 is an explanatory diagram depicting one example of a trust vector DB 1000.
Fig. 11 is an explanatory diagram depicting one example of a trust vector criteria DB 1100.
Fig. 12 is a block diagram depicting an example of a functional configuration of the information processing device 200.
Fig. 13 is an explanatory diagram depicting one example of operation of the information processing device 200.
Fig. 14 is an explanatory diagram depicting one example of the operation of the information processing device 200.
Fig. 15 is an explanatory diagram depicting one example of the operation of the information processing device 200.
Fig. 16 is an explanatory diagram depicting one example of the operation of the information processing device 200.
Fig. 17 is an explanatory diagram depicting one example of the operation of the information processing device 200.
Fig. 18 is an explanatory diagram depicting one example of the operation of the information processing device 200.
Fig. 19 is an explanatory diagram depicting a specific example that summarizes the operation of the information processing device 200.
Fig. 20 is an explanatory diagram depicting one example of a use case to which the information processing device 200 is applied.
Fig. 21 is an explanatory diagram depicting one example of a comparison with conventional methods.
Fig. 22 is a flowchart depicting one example of a procedure for a trust mapping process.
Fig. 23 is a flowchart depicting one example of a procedure for a top-down update process.
Fig. 24 is a flowchart depicting one example of a procedure for a bottom-up update process.
Fig. 25 is a flowchart depicting one example of a procedure for a weighting process.

### BEST MODE(S) FOR CARRYING OUT THE INVENTION

Embodiments of an information processing method, an information processing program, and an information processing device according to the present invention are described in detail with reference to the accompanying drawings.

### (One Example of Information Processing Method According to Embodiment)

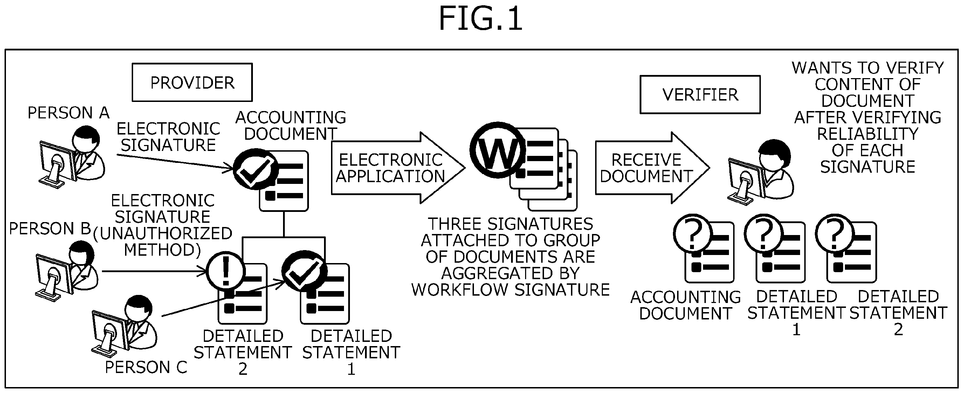

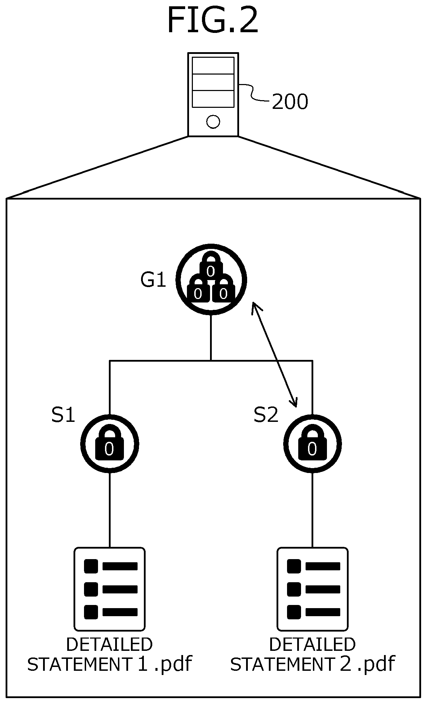

Figs. 1 and 2 are explanatory diagrams depicting one example of the information processing method according to an embodiment. An information processing device 200 described later with reference to Fig. 2 is a computer to facilitate verification of the reliability of data. The data is, for example, a document.

To prevent falsification of data, creation of unauthorized data by impersonation, or the like, from the perspective of the authenticity of the data, ensuring the reliability of the data by ensuring the authenticity of the data is desirable. An electronic signature may therefore be attached to data. The signature is information to ensure the reliability of the data. The signature is, for example, information to ensure the authenticity of the data. The authenticity indicates that the data is not falsified. The signature is realized by using a public key encryption. The signature ensures the reliability as data by, for example, ensuring that the data is not falsified.

From the perspective of the reliability of social items, ensuring the reliability of data by ensuring the reliability of the social items related to the data is further desirable. The reliability of the social items indicates, for example, whether the creator who creates the data, the organization to which the creator belongs, or the like is reliable. The reliability of the social items indicates whether the content of the data is appropriate for rules, contracts, a socially accepted idea, or the like and is reliable. In contrast, it can be considered that signatures attached, respectively, to pieces of data are aggregated into a WF-type signature. WF indicates, for example, work in which multiple persons approve multiple pieces of data (workflow), or approval work based on a hierarchical structure. The WF-type signature ensures the authenticity of WF for multiple pieces of data.

It is, however, difficult to enable multilateral verification of the reliability of each of the multiple pieces of data even when a WF-type signature is used. For example, the WF-type signature cannot ensure the reliability of the social items from the perspective other than that of the authenticity of the work in which multiple persons approve the multiple pieces of data. For example, the WF-type signature cannot ensure the reliability of the social items from the perspective of the evaluation of an individual, the evaluation of an organization, the actual existence of the organization, the type of signature method, or the like.

For example, with the WF-type signature, it is difficult to verify the reliability of each piece of data from the perspective of the authenticity of data because the record of the encryption strength of each of the aggregated original signatures, the information regarding the safety of the authentication agency, and the like are lost. For example, a verifier cannot verify the authenticity of each piece of data by only referring to the WF-type signature and cannot therefore verify whether any falsified data is present among the multiple pieces of data.

For example, to verify the authenticity of each piece of data, the verifier has to refer to each of the multiple signatures after referring to the WF-type signature. For example, the verifier has to determine whether the data is appropriate for advancing the operation by checking the authenticity of the data by the signature and the content of the data. This consequently leads to an increase of the workload on the verifier.

It is therefore desired to enable easy verification of the reliability of each piece of the multiple pieces of data each having a signature attached thereto and facilitate reduction of the workload necessary when the reliability of the multiple pieces of data is verified from both of the perspective of the authenticity of the data and the perspective of the reliability of the social items.

For example, as depicted in Fig. 1, a situation can be considered where persons A, B, and C constituting providers attach signatures to an accounting document, a detailed statement 1, and a detailed statement 2 constituting the pieces of data and a WF-type signature aggregating therein the three signatures is thereafter generated. The signature attached by the person B is attached by an unauthorized method and has relatively low reliability. Additionally, from the perspective of the common sense, deficiencies such as a lack of a description of the store name make the reliability of the social items low. In this situation, it is desirable to enable the verifier to easily verify the reliability of each piece of data from both of the perspective of the authenticity of the data and the perspective of the reliability of the social items, and thereafter enable the verifier to verify the data. For example, it is desirable to enable the verifier to easily know that the signature attached by the person B is attached by an unauthorized method and has relatively low reliability.

In this embodiment, an information processing method is described that can facilitate verification of the reliability of each piece of multiple pieces of data from both of the perspective of the authenticity of the data and the perspective of the reliability of the social items.

In Fig. 2, multiple pieces of data are present and have respectively different signatures attached thereto. In Fig. 2, a signature is generated aggregating therein the signatures that are attached to the pieces of data. In the following description, a signature that aggregates therein multiple signatures and that includes social trust elements such as organizational agreement, the order of the organizational agreement, the hierarchical structure of the organizational agreement, and a workflow related to the organizational agreement may be denoted by "combined signature". The combined signature is, for example, a WF-type signature. The combined signature is handled as, for example, a combined signature that is present in a tier that is that is one tier higher than that of the aggregated multiple signatures.

For each of the signatures, evaluation values each for an evaluation item related to the reliability of the data are set. The evaluation items are, for example, items to evaluate the reliability of the data from the perspective of the authenticity of the data. The evaluation items are, for example, items to evaluate the reliability of the data from the perspective of the reliability of the social items related to the data. For the combined signature, evaluation values each for an evaluation item related to the reliability of the data are similarly set.

In the following description, the reliability of data evaluated from the perspective of the authenticity of the data may be denoted by "data trust". In the following description, the reliability of data evaluated from the perspective of the reliability of the social items related to the data may be denoted by "social trust".

In the example in Fig. 2, a signature S1 is attached to data of the detailed statement 1.pdf. In the example in Fig. 2, a signature S2 is attached to data of the detailed statement 2.pdf. In the example in Fig. 2, a combined signature G1 aggregating therein the signature S1 and the signature S2 is generated. In the example in Fig. 2, evaluation values are set for the signature S1, the signature S2, and the combined signature G1.

(2-1) The information processing device 200 obtains a first evaluation value for an evaluation item related to the reliability corresponding to the combined signature that is obtained by aggregating therein the multiple signatures and a second evaluation value for an evaluation item related to the reliability corresponding to any one signature of the multiple signatures.

In the example in Fig. 2, the information processing device 200 obtains the first evaluation value for an evaluation item related to the reliability corresponding to the combined signature G1 and the second evaluation value for an evaluation item related to the reliability corresponding to the signature S1. For example, the information processing device 200 obtains the first evaluation value from the perspective of the authenticity of the data corresponding to the combined signature G1, and the second evaluation value from the perspective of the authenticity of the data corresponding to the signature S1. For example, the information processing device 200 may obtain the first evaluation value from the perspective of the reliability of the social items corresponding to the combined signature G1, and the second evaluation value from the perspective of the reliability of the social items corresponding to the signature S1.

(2-2) The information processing device 200 determines whether the obtained first evaluation value and the obtained second evaluation value differ from each other. In a case where the information processing device 200 determines that the values differ from each other, the information processing device 200, according to the hierarchical relation between the combined signatures and the one signature, executes control of changing the second evaluation value using the first evaluation value or changing the first evaluation value using the second evaluation value, based on the type of the evaluation item. The hierarchical relation may correspond to the social vertical relation between a generating party that generates the combined signature and a generating party that generates any one of the signatures.

In the example in Fig. 2, the information processing device 200 determines whether the type of the evaluation item is an item of the data trust or an item of the social trust. In a case where the information processing device 200 determines that the item is an item of the data trust, the information processing device 200 executes the control of changing the first evaluation value that corresponds to the combined signature present in a higher tier using the second evaluation value corresponding to the signature present in a lower tier. For example, the information processing device 200 executes the control of changing the first evaluation value from the perspective of the authenticity of the data corresponding to the combined signature G1, using the second evaluation value from the perspective of the authenticity of the data corresponding to the signature S1. For example, the information processing device 200 changes the first evaluation value corresponding to the combined signature G1 to be the same value as the second evaluation value that corresponds to the signature S1.

On the other hand, in a case where the information processing device 200 determines that the item is an item of the social trust, the information processing device 200 executes the control of changing the second evaluation value corresponding to the signature present in a lower tier, using the first evaluation value corresponding to the combined signature present in a higher tier. For example, the information processing device 200 executes the control of changing the second evaluation value from the perspective of the authenticity of the data corresponding to the signature S1 using the first evaluation value from the perspective of the authenticity of the data corresponding to the combined signature G1. For example, the information processing device 200 changes the second evaluation value corresponding to the signature S1 to have the same value as that of the first evaluation value corresponding to the combined signature G1.

The information processing device 200 can thereby facilitate the verification of the reliability of the data. A case can be considered, for example, where a signature present in a lower tier has relatively low reliability from the perspective of data trust. In this case, a combined document present in a higher tier aggregates therein the signatures each having relatively low reliability and it is preferred that the combined document be similarly handled as a combined document having relatively low reliability from the perspective of data trust. In contrast, the information processing device 200 can correct the evaluation value of the item of the data trust corresponding to the combined signature present in the higher tier using the evaluation value of the item of the data trust corresponding to the signature present in the lower tier.

The information processing device 200 can therefore correct the evaluation value of the item of the data trust corresponding to the combined signature such that this evaluation value correctly indicates the state of the combined signature. The information processing device 200 can enable the verifier to know the state of the combined signature by referring to the evaluation value of the item of the data trust corresponding to the combined signature and correctly verify the reliability of the data. The information processing device 200 can enable the verifier to verify the reliability of multiple pieces of data when the verifier verifies the evaluation value corresponding to the combined signature present in a higher tier without verifying the evaluation value corresponding to the signature present in a lower tier. The information processing device 200 can therefore facilitate reduction of the workload on the verifier.

The case can be considered, for example, where a signature present in a lower tier is a signature having relatively low reliability from the perspective of social trust. A situation can, however, be considered where, when a combined signature present in a higher tier is a signature having relatively high reliability from the perspective of social trust, the creator who creates the combined signature may handle the combined signature as a combined signature that ensures the reliability from the perspective of social trust, corresponding to the signature present in a lower tier. For example, a situation can be considered where a parent company aggregates multiple signatures created by its subsidiary companies and thereby creates a combined signature. For example, a situation can be considered where a supervisor aggregates multiple signatures created by his/her subordinates and thereby creates a combined signature. In contrast, the information processing device 200 can correct the evaluation value of the item of the social trust corresponding to a signature present in a lower tier using the evaluation value of the item of the social trust corresponding to the combined signature present in a higher tier.

The information processing device 200 therefore can correct the evaluation value of the item of the social trust corresponding to the signature such that this evaluation value correctly indicates the state of the signature. For example, according to the hierarchical relation, the information processing device 200 can correct the evaluation value of the item of the social trust corresponding to the signature such that this evaluation value correctly indicates the state of the signature, by taking into consideration the social vertical relation between the generating party that generates the combined signature and the generating party that generates any one of the signatures. The information processing device 200 can enable the verifier to know the state of the signature by referring to the evaluation value of the item of the social trust corresponding to the signature and correctly verify the reliability of the data. The information processing device 200 can therefore facilitate reduction of the workload on the verifier.

The information processing device 200 can ensure the authenticity of the data using the combined signature, the evaluation value corresponding to the combined signature, the signature, the evaluation value corresponding to the signature, and can prevent falsification of the data, creation of unauthorized data by impersonation, or the like. The information processing device 200 can ensure the reliability of the social items related to the data in addition to the authenticity of the WF using the combined signature, the evaluation value corresponding to the combined signature, the signature, and the evaluation value corresponding to the signature. The information processing device 200 can ensure, for example, the evaluation of an individual, the evaluation of an organization, the actual existence of the organization, the type of the signature method, or the like, and can ensure the reliability of the data.

The information processing device 200 can ensure the authenticity of the WF using the combined signature and can ensure the reliability of the data. The information processing device 200 can indicate the record of the encryption strength of the aggregated original signatures, the information regarding the safety of the authentication agency, and the like using the evaluation value, and can facilitate the verification of the reliability of each piece of data from the perspective of the authenticity of the data.

### (One Example of Reliability Management System 300)

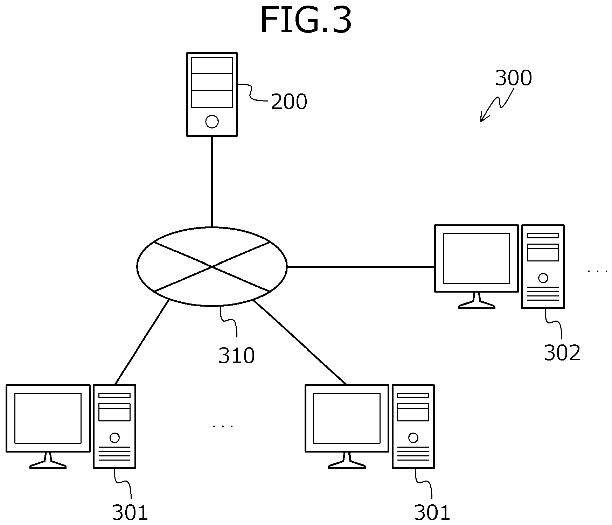

One example of a reliability management system 300 to which the information processing device 200 depicted in Fig. 2 is applied is described next with reference to Fig. 3.

Fig. 3 is an explanatory diagram depicting one example of the reliability management system 300. In Fig. 3, the reliability management system 300 includes the information processing device 200, a creator device 301, and a user device 302.

In the reliability management system 300, the information processing device 200 and the creator device 301 are connected to each other through a wired or radio network 310. The network 310 is, for example, a local area network (LAN), a wide area network (WAN), the Internet, or the like. In the reliability management system 300, the information processing device 200 and the user device 302 are connected to each other through the wired or radio network 310.

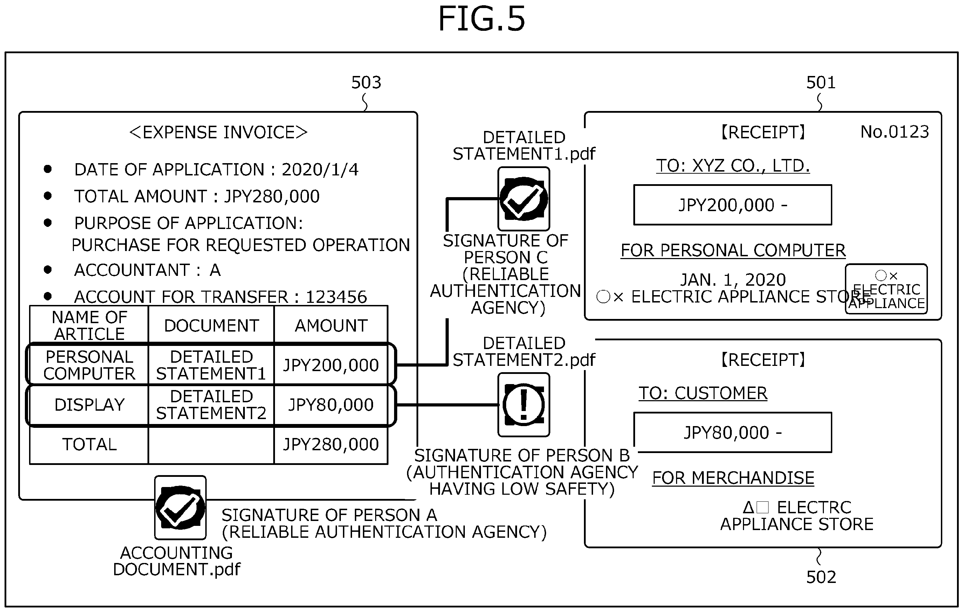

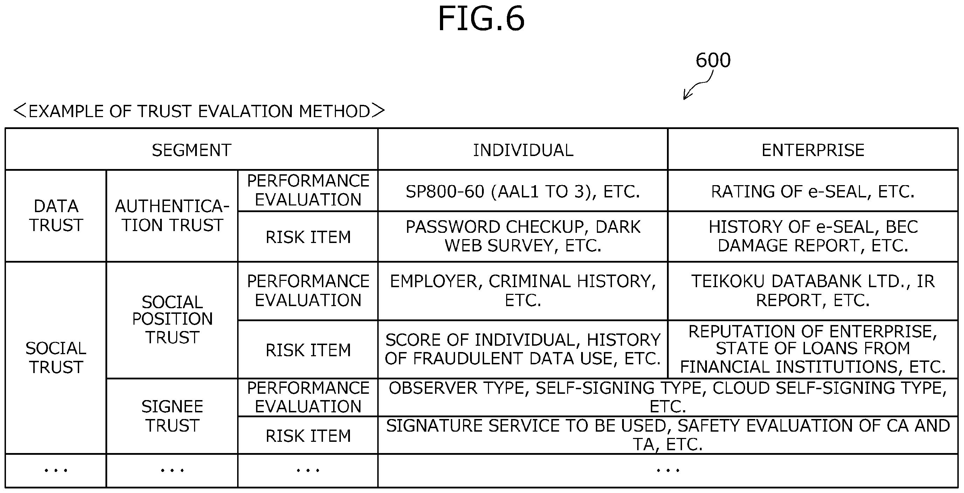

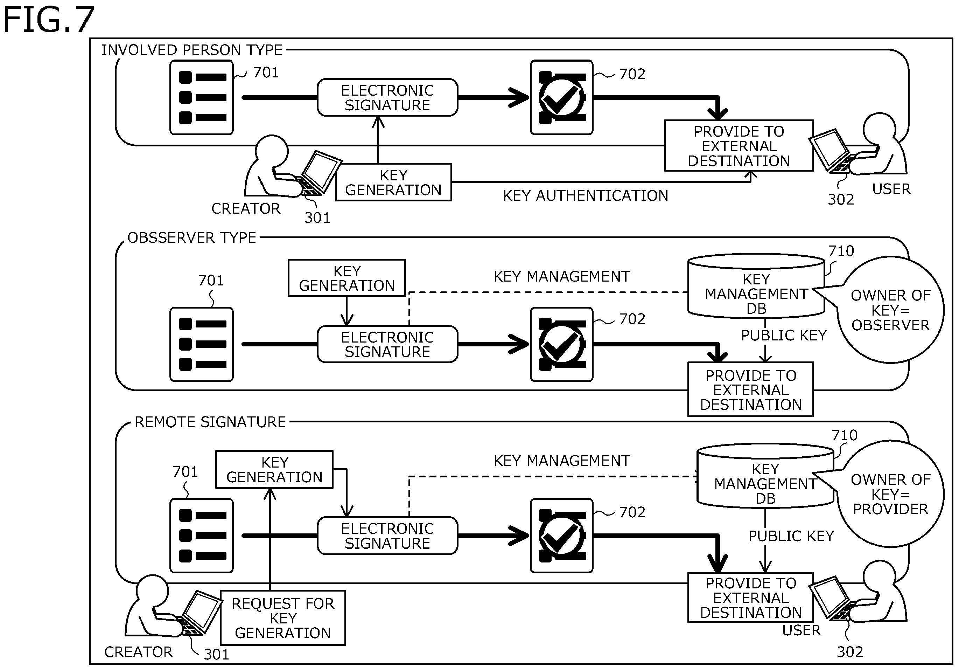

The information processing device 200 is a computer that can change the evaluation value for any evaluation item of the multiple evaluation items corresponding to the signature attached to the data. The data is, for example, a detailed statement, an accounting document, or the like. One example of the data is described later with reference to, for example, Fig. 5. The multiple evaluation items include, for example, the evaluation items of a type related to the data trust, the evaluation items of a type related to the social trust, and the like. Definitions of the evaluation items are described later with reference to, for example, Figs. 6 and 7.

The information processing device 200 receives the data from a device different from the information processing device 200. A device different from the information processing device 200 is, for example, the creator device 301. The information processing device 200 attaches an electronic signature to, for example, the received data. The data may already have a signature attached thereto by, for example, a device different from the information processing device 200.

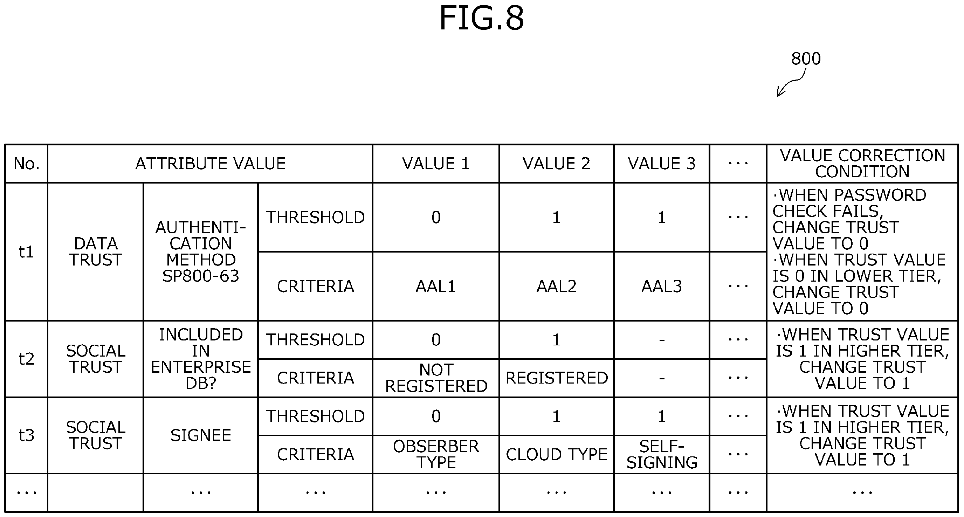

The information processing device 200 sets, for example, the evaluation value for each evaluation item of the multiple evaluation items corresponding to the signature. The information processing device 200 sets the evaluation value for each evaluation item of the multiple evaluation items corresponding to the signature, based on, for example, an evaluation criteria table 800. One example of the evaluation criteria table 800 is described later with reference to, for example, Fig. 8. The signature may already have the evaluation value set therefor by, for example, a device different from the information processing device 200.

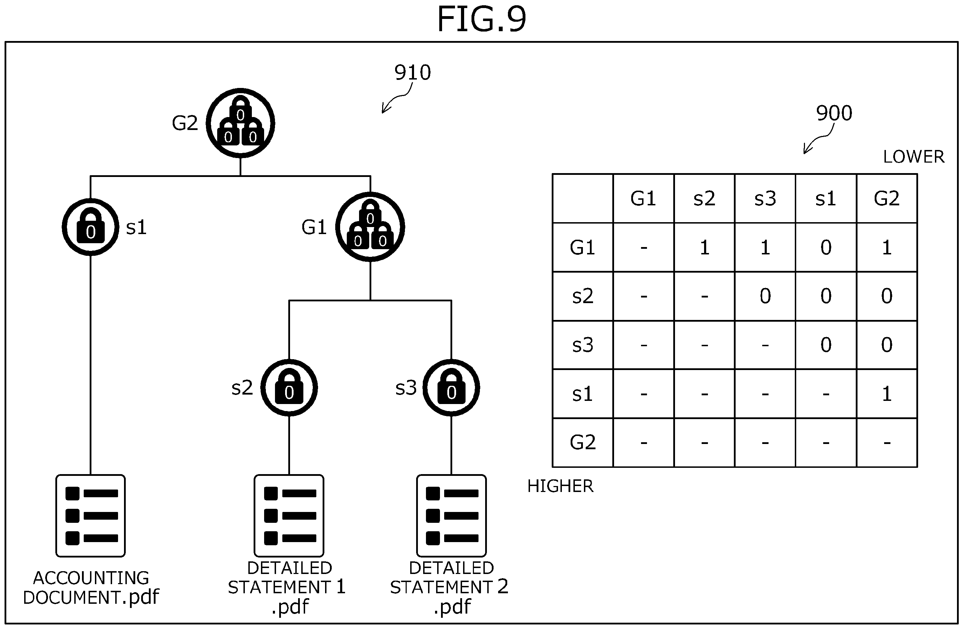

The information processing device 200 generates, for example, a WF-type signature that aggregates therein multiple signatures. The information processing device 200 stores the hierarchical relation between the multiple signatures and the WF-type signature that aggregates therein the multiple signatures, in a WF hierarchy table 900. One example of the WF hierarchy table 900 is described with reference to, for example, Fig 9.

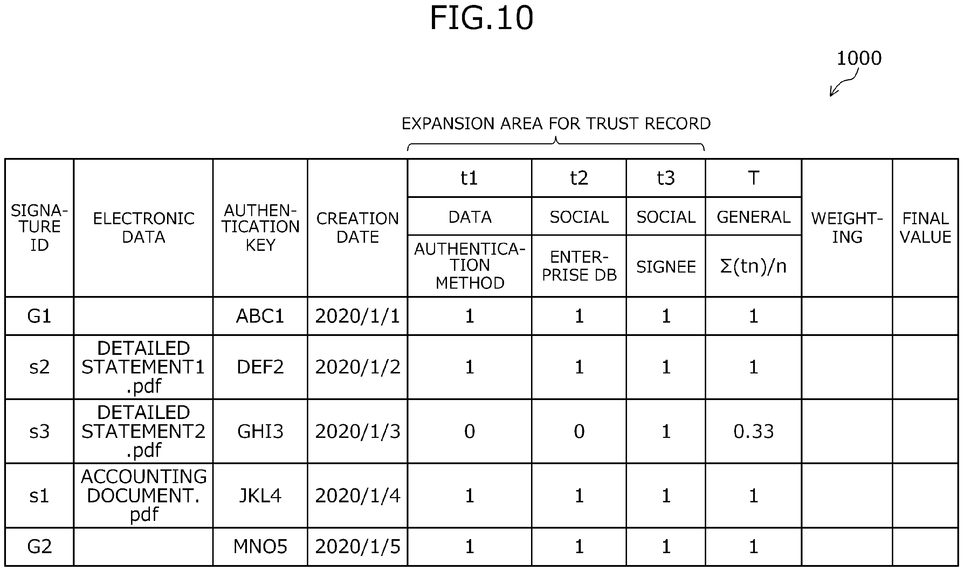

The information processing device 200 may receive the WF-type signature that aggregates therein the multiple signatures from, for example, a device different from the information processing device 200. The information processing device 200 sets, for example, the evaluation value for each evaluation item of the multiple evaluation items corresponding to the WF-type signature. The WF-type signature may already have the evaluation value set therefor by, for example, a device different from the information processing device 200. The information processing device 200 stores, for example, the various types of set evaluation values in a trust vector database (DB) 1000. The information processing device 200 stores in the trust vector DB 1000, for example, a trust vector having therein the various types of set evaluation values as elements. One example of the trust vector DB 1000 is described later with reference to, for example, Fig. 10.

According to the hierarchical relation between the multiple signatures and the WF-type signature, the information processing device 200, for example, based on the type of any one of the evaluation items, changes the evaluation value for the evaluation item corresponding to the signature or the evaluation value for the evaluation item corresponding to the WF-type signature.

The information processing device 200 outputs, for example, the hierarchical relation between the multiple signatures and the WF-type signature to be referable by the verifier. The information processing device 200 causes, for example, the user device 302 to display thereon the hierarchical relation between the multiple signatures and the WF-type signature to thereby enable the verifier using the user device 302 to refer thereto. The information processing device 200 outputs the multiple signatures and the WF-type signature to be referable by the verifier. The information processing device 200 causes, for example, the user device 302 to display thereon the multiple signatures and the WF-type signature to thereby enable the verifier using the user device 302 to refer thereto.

The information processing device 200 outputs, for example, the evaluation value for each evaluation item of the multiple evaluation items corresponding to each signature of the multiple signatures and the evaluation value of each evaluation item of the multiple evaluation items corresponding to the WF-type signature, to be referable by the verifier.

The information processing device 200 causes, for example, the user device 302 to display thereon, the evaluation value for each evaluation item of the multiple evaluation items corresponding to each signature of the multiple signatures to thereby enable the verifier using the user device 302 to refer thereto. The information processing device 200 causes, for example, the user device 302 to display thereon, the evaluation value for each evaluation item of the multiple evaluation items corresponding to the WF-type signature to thereby enable the verifier using the user device 302 to refer thereto.

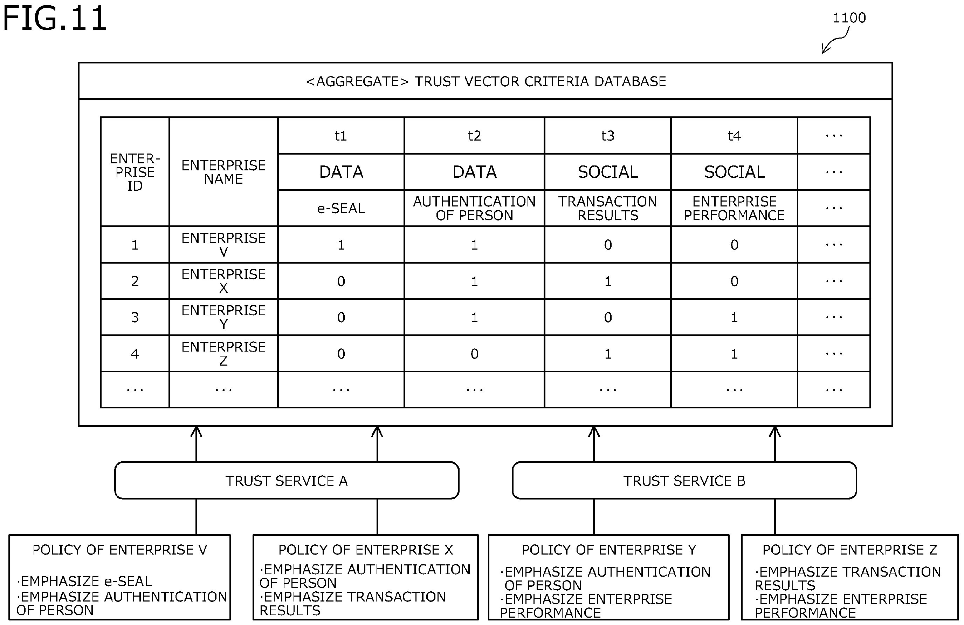

The information processing device 200 may verify, for example, the validity of a trust vector based on a trust vector criteria DB 1100. One example of the trust vector criteria DB 1100 is described later with reference to, for example, Fig. 11. The information processing device 200 may cause, for example, the user device 302 to display thereon, the result of the verification of the validity of the trust vector to thereby enable the verifier using the user device 302 to refer thereto. The information processing device 200 is, for example, a server, a personal computer (PC), or the like.

The creator device 301 is a computer used by the creator who creates data. The data is, for example, a detailed statement, an accounting document, or the like. The creator device 301 complies with operational input by the creator to create data. The creator device 301 transmits the created data to the information processing device 200. The creator device 301 is, for example, a server, a PC, a tablet terminal, a smartphone, or the like.

The user device 302 is a computer used by the verifier who verifies the reliability of data. The user device 302 complies with control by the information processing device 200 to display the hierarchical relation between the multiple signatures and the WF-type signature to be referable by the verifier. The user device 302 complies with control by the information processing device 200 to display the multiple signatures and the WR-type signature to be referable by the verifier.

The user device 302 complies with control by the information processing device 200 to display the evaluation value for each evaluation item of the multiple evaluation items corresponding to each signature of the multiple signatures, to be referable by the verifier. The user device 302 complies with control by the information processing device 200 to display the evaluation value for each evaluation item of the multiple evaluation items corresponding to the WF-type signature, to be referable by the verifier. The user device 302 is, for example, a server, a PC, a tablet terminal, a smartphone, or the like.

The reliability management system 300 is used, for example, when a transaction between organizations is executed. The reliability management system 300 is used in, for example, a situation where, in an organization, a signature is attached to each piece of multiple pieces of data created by respectively different employees and a WF-type signature aggregating therein the multiple signatures is created. The reliability management system 300 is used, for example, when a transaction is executed with another organization based on data.

While a case has been described above where the information processing device 200 is a device different from the creator device 301, the information processing device 200 is not limited to the above. For example, a case may be present where the information processing device 200 also has the function of the creator device 301. In this case, the reliability management system 300 may omit the creator device 301.

While a case has been described above where the information processing device 200 is a device different from the user device 302, the information processing device 200 is not limited to the above. For example, a case may be present where the information processing device 200 also has the function as the user device 302. In this case, the reliability management system 300 may omit the user device 302.

While a case has been described above where the creator device 301 is a device different from the user device 302, these devices are not limited to the above. For example, a case may be present where the creator device 301 also has the function of the user device 302. In this case, the reliability management system 300 may omit the user device 302.

While a case has been described above where the information processing device 200 attaches an electronic signature to data, the device attaching an electronic signature is not limited to the above. A case may be present, for example, where in addition to the information processing device 200, the reliability management system 300 includes another device that attaches an electronic signature to data. In this case, the other device attaches an electronic signature to data and transmits the data to the information processing device 200.

While a case has been described above where the information processing device 200 sets the evaluation value for each evaluation item of the multiple evaluation items corresponding to the signature, the device setting the evaluation value is not limited to the above. A case may be present, for example, where the reliability management system 300 includes another device that sets the evaluation value for each evaluation item of the multiple evaluation items corresponding to the signature, in addition to the information processing device 200. In this case, the other device sets the evaluation value for each evaluation item of the multiple evaluation items corresponding to the signature and transmits the set evaluation value to the information processing device 200.

While a case has been described above where the information processing device 200 generates the WF-type signature that aggregates therein the multiple signatures, the device that creates the WF-type signature is not limited to the above. A case may be present, for example, where in addition to the information processing device 200, the reliability management system 300 includes another device that generates a WF-type signature that aggregates therein multiple signatures. In this case, the other device generates a WF-type signature that aggregates therein multiple signatures and transmits the generated WF-type signature to the information processing device 200.

While a case has been described where the information processing device 200 sets the evaluation value for each evaluation item of the multiple evaluation items corresponding to the WF-type signature, the device setting the evaluation value is not limited to the above. A case may be present, for example, where in addition to the information processing device 200, the reliability management system 300 includes another device that sets the evaluation value for each evaluation item of the multiple evaluation items corresponding to the WF-type signature. In this case, the other device sets the evaluation value for each evaluation item of the multiple evaluation items corresponding to the WF-type signature and transmits the set evaluation value to the information processing device 200.

### (Example of Hardware Configuration of Information Processing Device 200)

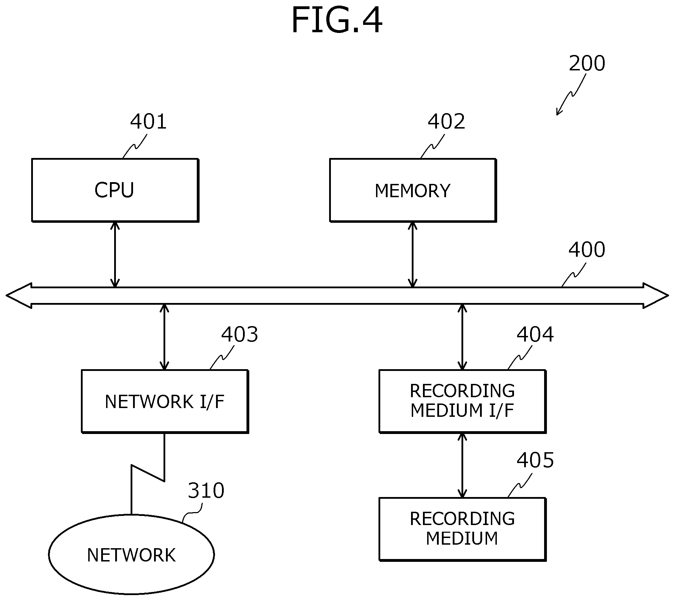

Next, an example of a hardware configuration of the information processing device 200 included in the reliability management system 300 depicted in Fig. 3 is described using Fig. 4.

Fig. 4 is a block diagram of the example of the hardware configuration of the information processing device 200. In Fig. 4, the information processing device 200 has a central processing unit (CPU) 401, a memory 402, a network interface (I/F) 403, a recording medium I/F 404, and a recording medium 405. Further, the components are connected to one another by a bus 400.

Here, the CPU 401 governs overall control of the information processing device 200. The memory 402, for example, includes a read-only memory (ROM), a random access memory (RAM), and a flash ROM, etc. In particular, for example, the flash ROM and the ROM store various types of programs and the RAM is used as a work area of the CPU 401. The programs stored in the memory 402 are loaded onto the CPU 401, whereby encoded processes are executed by the CPU 401.

The network I/F 403 is connected to a network 310 through a communications line and is connected to another computer via the network 310. Further, the network I/F 403 administers an internal interface with the network 310 and controls the input and output of data from the other computer. The network I/F 403, for example, is a modem, a LAN adapter, or the like.

The recording medium I/F 404 controls the reading and writing of data with respect to the recording medium 405, under the control of the CPU 401. The recording medium I/F 404, for example, is a disk drive, a solid state drive (SSD), a Universal Serial Bus (USB) port, of the like. The recording medium 405 is an involatile memory that stores therein data written thereto under the control of the recording medium I/F 404. The recording medium 405, for example, is a disk, a semiconductor memory, a USB memory, or the like. The recording medium 405 may be removable from the information processing device 200.

Tn addition to the components above, the information processing device 200 may have, for example, a keyboard, a mouse, a display, a printer, a scanner, a microphone, a speaker, etc. Further, the information processing device 200 may have the recording medium I/F 404 and/or the recording medium 405 in plural. The information processing device 200 may omit the recording medium I/F 404 and/or the recording medium 405.

### (One Example of Data Having Signature Attached Thereto)

One example of data having a signature attached thereto is described next with reference to Fig. 5.

Fig. 5 is an explanatory diagram depicting one example of data having a signature attached thereto. In the example in Fig. 5, the detailed statement 1.pdf is present as the data created by the person C. The detailed statement 1.pdf has a signature attached thereto that is created by the person C using an authentication agency having relatively high reliability and has relatively high reliability from the perspective of data trust. The content of the detailed statement 1.pdf is a receipt 501. The receipt 501 has relatively high reliability also from the perspective of social trust because the receipt 501 has a seal of a store stamped thereon, and the addressee and the description thereof are clearly presented thereon.

The detailed statement 2.pdf is present as the data created by the person B. The detailed statement 2.pdf has a signature attached thereon that is created by the person B using an authentication agency that has relatively low reliability and whose safety is relatively low, the detailed statement 2.pdf has relatively low reliability from the perspective of data trust. The content of the detailed statement 2.pdf is a receipt 502. The receipt 502 has relatively low reliability also from the perspective of social trust because the receipt 502 has no seal of any store stamped thereon, and the addressee and the description thereof are not clearly presented thereon.

The accounting document.pdf is present as the data created by the person A. For example, the person A creates the accounting document.pdf by consolidating the detailed statement 1.pdf and the detailed statement 2.pdf. The accounting document.pdf has a signature attached thereto that is created by the person A using an authentication agency having relatively high reliability and therefore has relatively high reliability from the perspective of data trust. The content of the accounting document.pdf is an account settlement document 503. It is preferred that the account settlement document 503 be handled as having relatively low reliability from the perspective of social trust because the account settlement document 503 includes the receipt 502, which has relatively low reliability from the perspective of social trust.

### (One Example of Definition of Evaluation Item)

One example of the definition of the evaluation item is described next with reference to Figs. 6 and 7.

Figs. 6 and 7 are explanatory diagrams depicting one example of the definition of the evaluation item. The evaluation item is defined as shown in, for example, a table 600 in Fig. 6. The evaluation item related to the data trust includes, for example, authentication trust. The authentication trust is evaluated from the perspective of performance evaluation and/or a risk item. The perspective of the performance evaluation is a perspective to evaluate whether the authentication trust is high. The perspective of the performance evaluation evaluates the extent of the authentication trust by evaluating the difference in the performance in a case where information, a method, or the like is used in a valid utilization method. The perspective of the risk item is a perspective to evaluate whether the authentication trust is low. The perspective of the risk item evaluates lowness of the authentication trust by evaluating whether any attack to maliciously use or falsify information, a method, or the like is possible.

The authentication trust is evaluated from the perspective of the performance evaluation based on, for example, whether a signature whose safety is relatively high is used, for an individual or an enterprise. The authentication trust is evaluated from the perspective of risk items based on, for example, the result of a password checkup, a dark web survey, or the like for an individual. The authentication trust is evaluated from the perspective of the risk items based on, for example, the rating of an e-seal, a business e-mail compromise (BEC) damage report, or the like for an enterprise.

The evaluation items related to the social trust include, for example, social position trust. The social position trust is evaluated from the perspective of at least any one of the performance evaluation and the risk items. The perspective of the performance evaluation is a perspective of evaluating whether the social position trust is high. The perspective of the performance evaluation evaluates the extent of the social position trust by evaluating the difference in the performance in a case where information, an approach, or the like is used in an authorized utilization method. The perspective of the risk items is a perspective to evaluate whether the social position trust is low. The perspective of the risk items evaluates the lowness of the social position trust by evaluating whether any attack to misuse or falsify information, an approach, or the like is possible.

The social position trust is evaluated from the perspective of the performance evaluation based on, for example, for an individual, a company to which the individual belongs or a criminal history of the individual. The social position trust is evaluated from the perspective of the performance evaluation based on, for example, Teikoku Databank, Ltd, an IR report, or the like for an enterprise. The social position trust is evaluated from the perspective of the risk items based on, for example, for an individual, a score of the individual, the history of use of fraudulent data, or the like. The social position trust is evaluated from the perspective of the risk items based on, for example, for an enterprise, the reputation of the enterprise, the state of loans from financial institutions, or the like.

The evaluation items related to the social trust include, for example, signee trust. The signee trust is evaluated from the perspective of at least any one of the performance evaluation and the risk items. The perspective of the performance evaluation is a perspective to evaluate whether the signee trust is high. The perspective of the performance evaluation evaluates the extent of the signee trust by evaluating the difference in the performance in the case where information, an approach, or the like is used using an authorized utilization method. The perspective of the risk items is a perspective to evaluate whether the signee trust is low. The perspective of the risk items evaluates the lowness of the signee trust by evaluating whether any attack to misuse or falsify information, an approach, or the like is possible.

The signee trust is evaluated from the perspective of the performance evaluation based on, for example, a signature method. One example of the signature method is described later with reference to, for example, Fig. 7. The signee trust is evaluated from the perspective of the risk items based on, for example, the type of the signature service providing a signature generating function, the safety evaluation of CA, the safety evaluation of TA, or the like. Next, Fig. 7 is described.

As depicted in Fig. 7, signature methods are present such as that of an involved person type, that of an observer type, and a remote signature. The involved person-type signature method is a signature method in which the creator device 301 generates and manages a key to generate a signature. In the involved person-type signature method, the creator device 301 attaches a signature to data 701 and provides data 702 after attaching the signature thereto, to an external destination. The external destination is, for example, the information processing device 200, the user device 302, or the like.

The observer-type signature method is a signature method in which an observer for a signature checks the data 701 and an observer device retained by the observer generates a key to generate the signature and manages the key in a key management DB 710. In the observer-type signature method, the observer device retained by the observer therefore attaches the signature to the data 701 and provides the data 702 after attaching the signature thereto, to an external destination. The external destination is, for example, the information processing device 200, the user device 302, or the like.

The remote signature is a signature method in which a signature generating function is implemented in a cloud environment used by the creator and the creator device 301 transmits a key generation request that includes the data 701, to the cloud environment. The cloud environment generates a key to generate the signature and manages the key in the key management DB 710. The cloud environment attaches the signature to the data 701 and provides the data 702 after attaching the signature thereto, to an external destination. The external destination is, for example, the information processing device 200, the user device 302, or the like.

### (One Example of Evaluation Criteria Table 800)

One example of the evaluation criteria table 800 is described next with reference to Fig. 8. The evaluation criteria table 800 is realized by, for example, a storage area such as the memory 402, the recording medium 405, or the like of the information processing device 200 depicted in Fig. 4.

Fig. 8 is an explanatory diagram depicting one example of the evaluation criteria table 800. As depicted in Fig. 8, the evaluation criteria table 800 includes fields for "No.", "attribute value", "value", and "value correction condition". In the evaluation criteria table 800, evaluation criteria information is stored by setting information in each of the fields for each attribute value.

In the field for "No.", a serial number corresponding to the attribute value is set. In the field for the attribute value, the type of the evaluation item is set. The type of the evaluation item is the data trust or the social trust. In the field for the attribute value, the content of the evaluation item is further set. In the field for the attribute value, the threshold value and the criterion segmentation are further set.

In the field for the value, the threshold value and the criterion are set according to the segmentation. In the field for the value, an element to evaluate the data trust or the social trust is set as the criterion. In the field for the value, whether the criterion satisfies the conditions to ensure the data trust or the social trust is set as the threshold value. Of the multiple criteria, the border between the criteria with which the data trust or the social trust is ensured and the criteria with which the data trust and the social trust is not ensured can be determined by the threshold value.

When the threshold value is 0, this indicates that the criteria do not satisfy the conditions for ensuring the data trust or the social trust. When the threshold value is 1, this indicates that the criteria satisfy the conditions for ensuring the data trust or the social trust. In a case where the criteria are satisfied, the threshold value is used as it is, as the trust value that indicates the degree of the data trust or the social trust.

In the field for the value correction condition, the condition for correcting the trust value that indicates the degree of the data trust or the social trust, and the correction content for the trust value for a case where the condition is satisfied are set. Even in the case where the trust value corresponds to the above criteria, when the condition for correcting the trust value is satisfied, the trust value is consequently corrected according to the correction content.

### (One Example of WF Hierarchy Table 900)

One example of a WF hierarchy table 900 is described next with reference to Fig. 9. The WF hierarchy table 900 is realized by, for example, a storage area such as the memory 402 or the recording medium 405 of the information processing device 200 depicted in Fig. 4.

Fig. 9 is an explanatory diagram depicting one example of the WF hierarchy table 900. As depicted in Fig. 9, the WF hierarchy table 900 is a table that associates a value of 0 or 1 with each combination of a signature present in a higher tier and a signature present in a lower tier. In the example in Fig. 9, a signature ID indicating a signature is associated with each row. In the example in Fig. 9, a signature ID indicating a signature is associated with each column.

When a signature of a signature ID corresponding to a row is a signature present in a tier that is one tier higher than that of a signature of a signature ID corresponding to a column, a value of 1 is associated with the combination of the signature of the signature ID corresponding to the row and the signature of the signature ID corresponding to the column. On the other hand, when a signature of a signature ID corresponding to a row is a signature not present in a tier that is one tier higher than that of a signature of the signature ID corresponding to a column, a value of 0 is associated with the combination of the signature of the signature ID corresponding to the row and the signature of the signature ID corresponding to the column.

The state in the WF hierarchy table 900 in Fig. 9 indicates the hierarchical relation between signatures depicted in a graph 910. The graph 910 depicts that the WF-type signature G1 is present in a tier that is one tier higher than that of a signature s2 and a signature s3, and depicts that the signature G1 aggregates therein the signature s2 and the signature s3. The graph 910 indicates that a WF-type signature G2 is present in a tier that is one tier higher than that of a signature s1 and that of the signature G1, and indicates that the signature G2 aggregates therein the signature s1 and the signature G1.

The graph 910 indicates that, after the signature s2 and the signature s3 are once aggregated in the signature G1, the signature G1 and the signature s1 are further aggregated in the signature G2, and the accounting document.pdf thereby includes the detailed statement 1.pdf and the detailed statement 2.pdf.

### (One Example of Trust Vector DB 1000)

One example of the trust vector DB 1000 is described next with reference to Fig. 10. The trust vector DB 1000 is realized by, for example, a storage area such as the memory 402 or the recording medium 405 of the information processing device 200 depicted in Fig. 4.

Fig. 10 is an explanatory diagram depicting one example of the trust vector DB 1000. As depicted in Fig. 10, the trust vector DB 1000 includes fields for "signature ID", "electronic data", "authentication key", "creation date", "trust values t", "general trust value T", "weight", and "final value". In the trust vector DB 1000, trust vector information is stored by setting information in each of the fields for each signature.

In the field for the signature ID, a signature ID representing the signature is set. In the field for the electronic data, the name of the electronic data to which the signature is attached is set. In the field for the authentication key, a key ID representing an authentication key used when the signature is generated is set. In the field for the creation date, the date of the creation of the electronic data is set.

In the fields for the trust values t, trust values t each indicating the degree of the data trust or the social trust are set. In the example in Fig. 10, the trust vector DB 1000 includes fields for trust values t1 to t3. In the field for the trust value t1, the trust value t1 indicating the degree of the data trust is set. In the fields for the trust values t2 and t3, the trust values t2 and t3 are set each indicating the degree of the social trust.

In the field for the general trust value T, the average value of the trust values t is set. In the field for the weight, the weighting coefficient applied to the general trust value T is set. In the field for the final value, the final value is set that is obtained by multiplying the general trust value T by the weight. The reliability of the electronic data is therefore accurately represented by the trust values t, the general trust value T, and the final value.

### (One Example of Trust Vector Criteria DB 1100)

One example of the trust vector criteria DB 1100 is described next with reference to Fig. 11. The trust vector criteria DB 1100 is realized by, for example, a storage area such as the memory 402 or the recording medium 405 of the information processing device 200 depicted in Fig. 4.

Fig. 11 is an explanatory diagram depicting one example of the trust vector criteria DB 1100. As depicted in Fig. 11, the trust vector criteria DB 1100 includes fields for "enterprise ID", "enterprise name", and "trust values t". In the trust vector criteria DB 1100, trust vector criteria information is stored by setting information in each of the fields for each enterprise.

In the field for the enterprise ID, an enterprise ID representing an enterprise is set. In the field for the enterprise name, the name of the enterprise is set. In each of the fields for the trust values t, what value or higher is preferable as the trust value t that indicates the degree of the data trust or the social trust, according to the enterprise policy of the enterprise is set.

In the example in Fig. 11, the trust vector criteria DB 1100 includes fields for "trust values t1 to t4". In the fields for the trust values t1 and t2, the trust values t1 and t2 are set each indicating the degree of the data trust. In the fields for the trust values t3 and t4, the trust values t3 and t4 are set each indicating the degree of the social trust.

The information processing device 200 enables verification of whether a trust vector corresponding to electronic data follows the enterprise policy by comparing the trust vector DB 1000 and the trust vector criteria DB 1100 with each other.

### (Example of Hardware Configuration of Creator Device 301)

An example of the hardware configuration of the creator device 301 included in the reliability management system 300 depicted in Fig. 3 is similar to, for example, the example of the hardware configuration of the information processing device 200 depicted in Fig. 4, and therefore will not again be described.

### (Example of Hardware Configuration of User Device 302)

An example of the hardware configuration of the user device 302 included in the reliability management system 300 depicted in Fig. 3 is similar to, for example, the example of the hardware configuration of the information processing device 200 depicted in Fig. 4, and therefore will not again be described.

### (Example of Functional Configuration of Information Processing Device 200)

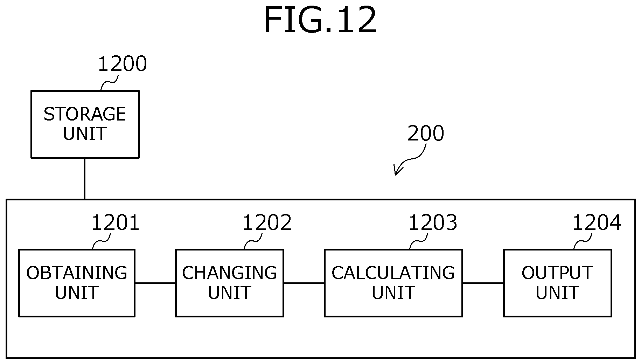

An example of the functional configuration of the information processing device 200 is described next with reference to Fig. 12.

Fig. 12 is a block diagram depicting an example of the functional configuration of the information processing device 200. The information processing device 200 includes a storage unit 1200, an obtaining unit 1201, a changing unit 1202, a calculating unit 1203, and an output unit 1204.

The storage unit 1200 is realized by, for example, a storage area such as the memory 402 or the recording medium 405 depicted in Fig. 4. While a case where the storage unit 1200 is included in the information processing device 200 is described below, the configuration is not limited to the above. A case may be present, for example, where the storage unit 1200 is included in a device different from the information processing device 200 and the stored content of the storage unit 1200 is referable from the information processing device 200.

The obtaining unit 1201 to the output unit 1204 function as one example of a control unit. The obtaining unit 1201 to the output unit 1204 realize the functions thereof, for example, by causing the CPU 401 to execute programs stored in a storage area such as, for example, the memory 402 or the recording medium 405 depicted in Fig. 4, or by the network I/F 403. The processing results of the functional units are stored in a storage area such as the memory 402 or the recording medium 405 depicted in Fig. 4.

The storage unit 1200 stores therein various types of information to be referred to or updated in the processing by each of the functional units. The storage unit 1200 stores therein, for example, data and a signature attached to the data. The data is, for example, an accounting document or a detailed statement. The signature is the information that ensures the authenticity of the data. The storage unit 1200 stores therein, for example, a combined signature that aggregates therein multiple signatures. The combined signature is a WF-type signature. The multiple signatures to be aggregated may, for example, include another combined signature.

The combined signature is realized by, for example, a hash chain-type cipher. As one condition of the combined signature, the sequence has to be present for ciphers created by multiple persons. The combined signature may be realized by, for example, an aggregate signature. In this case, the combined signature is realized by, for example, an aggregate signature that aggregates therein signatures each attached to a different piece of data and that can indicate organizational agreement, the sequence, the tier, the workflow, and the like.

The storage unit 1200 stores therein, for example, an evaluation value for an evaluation item related to the reliability, associating the evaluation value to a signature. The evaluation item is an evaluation item of the type related to the reliability for a social item, or an evaluation item of the type related to the reliability for the authenticity of the data. The social item is, for example, an individual or an organization. The social item may be, for example, the content of the data. The evaluation item may be an evaluation item of a type related to a different perspective from that of the reliability for a social item and that of the reliability for the authenticity of the data.

The evaluation item is, for example, an evaluation item to evaluate the reliability for the social item based on whether the social item is included in a social item list that is registered in advance. The evaluation item is, for example, an evaluation item to evaluate the reliability for a social item based on the relation between the social item and the creator of the signature. The evaluation item is an evaluation item to evaluate the reliability for the authenticity of the data based on verification of the signature.

The obtaining unit 1201 obtains various types of information to be used in the processing by each of the functional units. The obtaining unit 1201 stores the various types of obtained information to the storage unit 1200 or outputs the information to the functional units. The obtaining unit 1201 may output the various types of information stored in the storage unit 1200, to the functional units. The obtaining unit 1201 obtains each of various types of information based on, for example, an operational input by a user. The obtaining unit 1201 may, for example, receive various types of information from a device different from the information processing device 200.

The obtaining unit 1201 obtains, for example, data having a signature attached thereto. The obtaining unit 1201 obtains, for example, an evaluation value for an evaluation item related to the reliability corresponding to the signature. The obtaining unit 1201 obtains, for example, a first evaluation value for an evaluation item related to the reliability corresponding to a combined signature, and a second evaluation value for an evaluation item related to the reliability corresponding to any one signature of the multiple signatures aggregated in the combined signature.

The obtaining unit 1201 obtains the first evaluation value and the second evaluation value by, for example, reading these values from the storage unit 1200. The obtaining unit 1201 may obtain the first evaluation value and the second evaluation value by, for example, receiving these values from another computer. The obtaining unit 1201 obtains the first evaluation value and the second evaluation value in a case, for example, where a predetermined operational input is executed by a user.

The obtaining unit 1201 may accept a start trigger to start the processing by any one of the functional units. The start trigger is, for example, an execution of a predetermined operational input by a user. The start trigger may also be, for example, reception of predetermined information from another computer. The start trigger may further be, for example, output of predetermined information by any one of the functional units.

The changing unit 1202 determines whether the obtained first evaluation value and the obtained second evaluation value differ from each other. In a case where the changing unit 1202 determines that the values differ from each other, the changing unit 1202, according to the hierarchical relation between the combined signature and any one of the signatures, executes control of changing the second evaluation value using the first evaluation value or changing the first evaluation value using the second evaluation value, based on the type of the evaluation item.

The changing unit 1202 determines, for example, whether the type of the evaluation item is a type related to the reliability for a social item or is a type related to the reliability for the authenticity of the data. For example, in the case where the changing unit 1202 determines that the type of the evaluation item is the type related to the reliability for a social item, the changing unit 1202 executes the control of changing the second evaluation value using the first evaluation value. On the other hand, for example, in the case where the changing unit 1202 determines that the type of the evaluation item is the type related to the reliability for the authenticity of the data, the changing unit 1202 executes the control of changing the first evaluation value using the second evaluation value.

For example, the changing unit 1202 determines whether the type of the evaluation item is an item of the data trust or is an item of the social trust. For example, in the case where the changing unit 1202 determines that the type of the evaluation item is an item of the data trust, the changing unit 1202 executes control of changing the first evaluation value corresponding to the combined signature present in a higher tier, using the second evaluation value corresponding to a signature present in a lower tier.

The changing unit 1202 can thereby facilitate the verification of the reliability of the data. For example, when a signature present in a lower tier has relatively low reliability from the perspective of data trust, the changing unit 1202 can handle a combined document present in a higher tier as having relatively low reliability from the perspective of data trust, in line with (in accordance with) the signature that is present in a lower tier. The changing unit 1202 can therefore accurately verify the reliability of the data without, for example, exhaustively checking the evaluation value corresponding to the combined signature and the evaluation value corresponding to each signature of the multiple signatures aggregated in the combined signature.

The changing unit 1202 determines, for example, whether the type of the evaluation item is an item of the data trust or an item of the social trust. For example, in the case where the changing unit 1202 determines that the type of the evaluation item is an item of the social trust, the changing unit 1202 executes control of changing the second evaluation value corresponding to a signature present in a lower tier using the first evaluation value corresponding to a combined signature present in a higher tier.

The changing unit 1202 can thereby facilitate verification of the reliability of the data. For example, when a combined signature present in a higher tier has relatively high reliability from the perspective of social trust, the changing unit 1202 can also handle a signature present in a lower tier as having relatively high reliability from the perspective of social trust, in line with the combined signature present in the higher tier. The changing unit 1202 can therefore accurately verify the reliability of the data without, for example, exhaustively checking the evaluation value corresponding to the combined signature and the evaluation value corresponding to each signature of the multiple signatures aggregated in the combined signature.

The calculating unit 1203 calculates, based on the evaluation value for each evaluation item of the multiple evaluation items related to the reliability corresponding to each signature of the multiple signatures aggregated in the combined signature, the general evaluation value related to this reliability. The calculating unit 1203 calculates, for example, a statistical value of the evaluation value for each evaluation item of the multiple evaluation items related to the reliability corresponding to each signature of the multiple signatures, as the general evaluation value. The statistical value is, for example, the average value, the mode value, the median value, the total value, the minimal value, the maximal value, or the variance.

The calculating unit 1203 can thereby calculate the general evaluation value related to the reliability corresponding to each signature by taking into consideration both the perspective of the data trust and the perspective of the social trust. The calculating unit 1203 can therefore facilitate the verification of the reliability corresponding to each signature.

The calculating unit 1203 calculates a statistical evaluation value based on the calculated general evaluation value. The calculating unit 1203 calculates, for example, the statistical value of the calculated general evaluation value as the statistical evaluation value. The statistical value is, for example, the average value, the mode value, the median value, the total value, the minimal value, the maximal value, or the variance.

The calculating unit 1203 can thereby calculate the statistical evaluation value related to the reliability corresponding to the combined signature, by taking into consideration the variation of the general evaluation value related to the reliability corresponding to the multiple signatures aggregated in the combined signature. The calculating unit 1203 can therefore facilitate the verification of the reliability corresponding to the combined signature.

The calculating unit 1203 may calculate the statistical evaluation value in, for example, a state where each of the calculated general evaluation values is weighted, based on an appearance rate of each general evaluation value in a group of the calculated general evaluation values.

The calculating unit 1203 can thereby calculate the statistical evaluation value related to the reliability corresponding to the combined signature, by taking accurately into consideration the variation of the general evaluation values related to the reliability corresponding to the multiple signatures aggregated in the combined signature. The calculating unit 1203 can therefore further facilitate the verification of the reliability corresponding to the combined signature.

The output unit 1204 outputs the processing result of at least any one of the functional units. The form of output is, for example, display on a display, output to a printer for printing, transmission to an external device by the network I/F 403, or storage to a storage area such as the memory 402 or the recording medium 405. The output unit 1204 can thereby enable notification of the processing result of at least any one of the functional units to a user and can facilitate improvement of the convenience of the information processing device 200.

### (One Example of Operation of Information Processing Device 200)

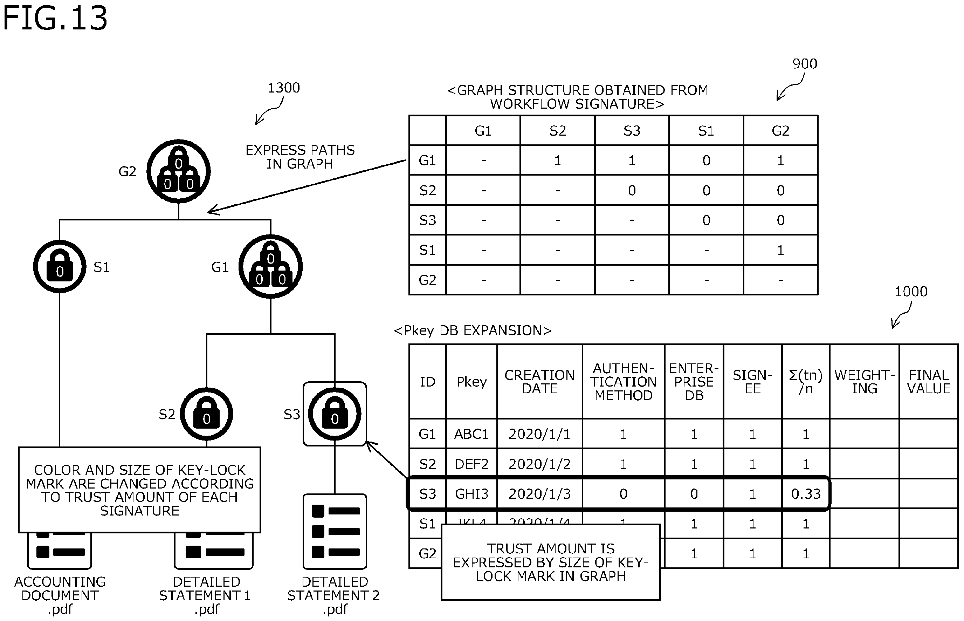

One example of the operation of the information processing device 200 is described next with reference to Fig. 13 to Fig. 18.

Figs. 13 to 18 are explanatory diagrams depicting one example of the operation of the information processing device 200. In Fig. 13, the information processing device 200 generates a graph 1300 that uses a signature as a node. In the graph 1300, a node of a WF-type signature and a node of a signature aggregated in the WF-type signature are connected by an edge. The information processing device 200 stores the connection state of the nodes indicating the hierarchical relation between the signatures, in the WF hierarchy table 900.

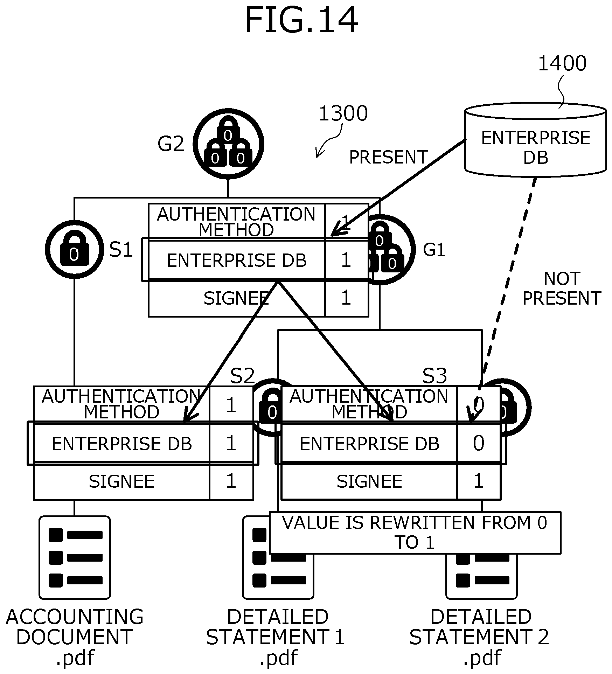

The information processing device 200 calculates the average value Σ(tn)/n of the trust values tn as a trust amount T, for each of the signatures, based on the trust vector DB 1000. The information processing device 200 stores the calculated trust amount T to the trust vector DB 1000. Fig. 14 is described next.

In Fig. 14, the information processing device 200 corrects the trust value according to the hierarchical relation between the signatures, based on the WF hierarchy table 900. The information processing device 200 corrects, for example, the trust value tn of the social trust of a signature present in a lower tier using the trust value tn of the social trust of a signature present in a higher tier. The trust value tn of the social trust is set based on whether the enterprise name corresponding to the signature is present in an enterprise DB 1400.

In the example in Fig. 14, the information processing device 200 overwrites a social trust value 0 related to the enterprise DB of the signature S3 present in a lower tier with a social trust value 1 related to the enterprise DB of the WF-type signature G1 present in a higher tier. The information processing device 200 may correct the trust amount T according to the correction of the trust value tn. The information processing device 200 can thereby change the trust value tn of the social trust of the signature present in the lower tier, to a value that is in line with the actual state.

A case can be considered, for example, where, in a state where subsidiary companies each create data of a detailed statement and each attach a signature to the data, a parent company thereof generates a WF-type signature that aggregates therein the signatures. In this case, it is customarily preferred that the parent company have the responsibility for the pieces of data of the detailed statements created by the subsidiary companies.

In contrast, the information processing device 200 can use the trust value tn of the social trust of the WF-type signature present in a higher tier and correct the trust values tn of the social trust of the signatures present in a lower tier that are aggregated in a WF-type signature. The information processing device 200 can therefore take into consideration the customary relation between the parent company and the subsidiary companies, and change the trust value tn of the social trust of the signatures present in a lower tier to a value that is in line with the actual state.

A case can be considered, for example, where multiple signatures are generated by the observer-type signature method and the generated multiple signatures are aggregated to generate a WF-type signature by the involved person-type signature method. In this case, it is determined that the involved person-type signature method has higher reliability from the perspective of social trust than that of the observer-type signature method.

In contrast, the information processing device 200 can correct the trust value tn of the social trust of each of the signatures present in a lower tier that are aggregated into a WF-type signature, by using the trust value tn of the social trust of the WF-type signature present in a higher tier. The information processing device 200 can therefore take the signature method into consideration and change the trust value tn of the social trust of a signature present in a lower tier to a value that is in line with the actual state.

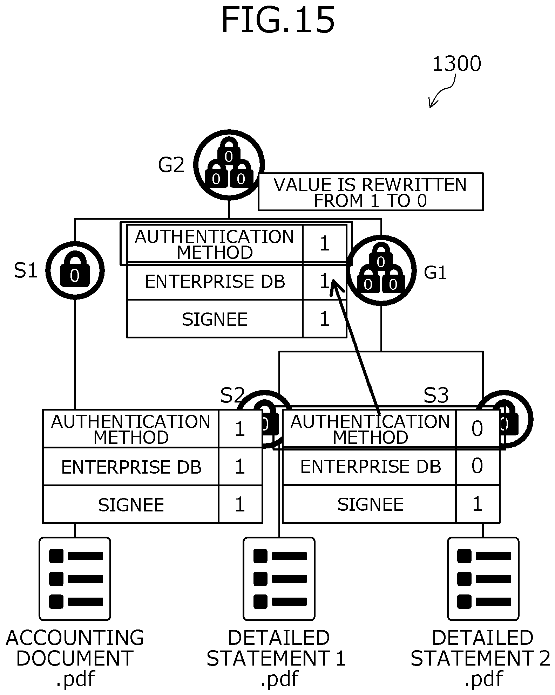

While a case has been described above where the information processing device 200 corrects the trust value tn of the social trust of a signature present in a lower tier by using the trust value tn of the social trust of a signature present in a higher tier, the correction is not limited to the above. A case may be present, for example, where the information processing device 200 corrects the trust value tn of the social trust of a signature present in a higher tier by using the trust value tn of the social trust of a signature present in a lower tier. The information processing device 200 consequently corrects the trust value tn of the social trust of a signature present in a lower tier or the trust value tn of the social trust of a signature present in a higher tier following, for example, a security policy of the creator or the like. Fig. 15 is described next.

In Fig. 15, the information processing device 200 corrects the trust value according to the hierarchical relation between signatures based on the WF hierarchy table 900. For example, the information processing device 200 corrects the trust value tn of the data trust of a signature present in a higher tier using the trust value tn of the data trust of a signature present in a lower tier.

In the example in Fig. 15, the information processing device 200 overwrites the data trust value 1 related to the authentication method for the WF-type signature G1 present in the higher tier with the minimal value 0 of the data trust values {1,0} related to the authentication method for the signatures S2 and S3 present in the lower tier. The information processing device 200 may correct the trust amount T to be in line with the correction of the trust value tn. The information processing device 200 can thereby change the trust value tn of the data trust of a signature present in a higher tier to a value that is in line with the actual state.

The case can be considered, for example, where multiple signatures are generated through an authentication agency whose safety is relatively low and the generated multiple signatures are aggregated to generate a WF-type signature through an authentication agency whose safety is relatively high. The authentication agency whose safety is relatively high is an authentication agency that is domestically and internationally certified, or the like. The authentication agency whose safety is relatively low is an authentication agency established by an individual, or the like. In this case, even though the WF-type signature is generated through the authentication agency whose safety is relatively high, it is preferred that the WF-type signature be handled as having relatively low reliability because the WF-type signature includes the signatures generated through the authentication agency whose safety is low.

In contrast, the information processing device 200 can correct the trust value tn of the data trust of the WF-type signature present in a higher tier using the trust value tn of the data trust of the signatures present in a lower tier that are aggregated in the WF-type signature. The information processing device 200 can therefore change the trust value tn of the data trust of the WF-type signature present in a higher tier to a value that is in line with the actual state, by taking the authentication agency into consideration.

A case can be considered, for example, where multiple signatures are generated in an individual authentication method with which impersonation is possible and the generated multiple signatures are aggregated to generate a WF-type signature in an authentication method having relatively high reliability. In this case, even though the WF-type signature is generated in the authentication method having relatively high reliability, it is preferred that the WF-type signature be handled as having relatively low reliability because the WF-type signature includes the signatures generated through the authentication agency whose safety is low.

In contrast, the information processing device 200 can correct the trust value tn of the data trust of a WF-type signature present in a higher tier using the trust value tn of the data trust of each of the signatures present in a lower tier that are aggregated in the WF-type signature. The information processing device 200 can therefore change the trust value tn of the data trust of the WF-type signature present in the higher tier to the value that is in line with the actual state, by taking into consideration the authentication method with which impersonation is possible, and the like.

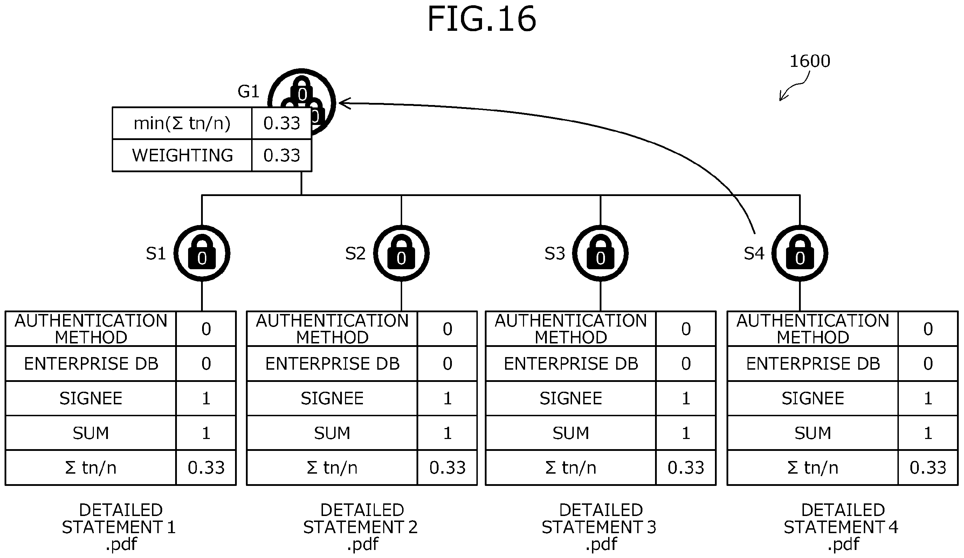

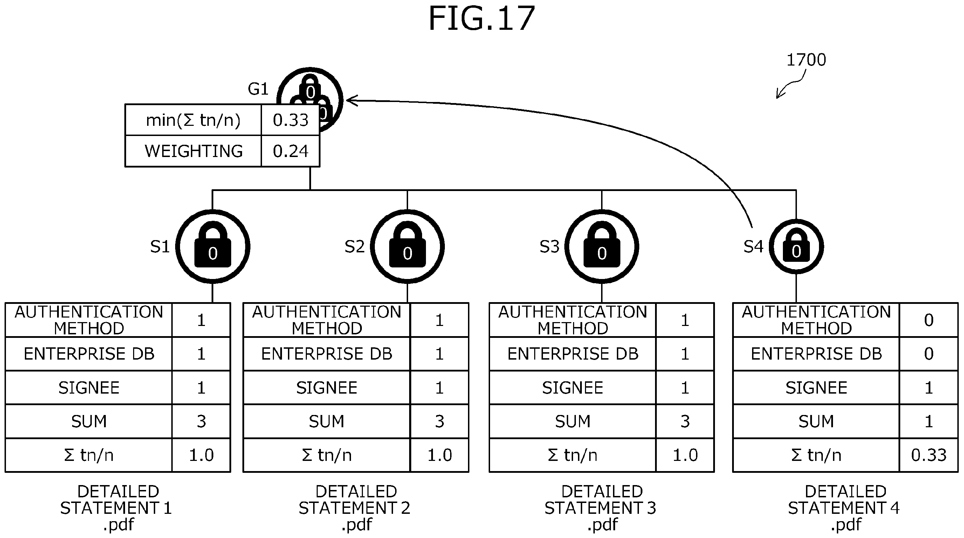

While a case has been described above where the information processing device 200 corrects the trust value tn of the data trust of the signature present in the higher tier using the trust value tn of the data trust of the signature present in the lower tier, the correction is not limited to the above. A case may be present, for example, where the information processing device 200 corrects the trust value tn of the data trust of a signature present in a lower tier using the trust value tn of the data trust of a signature present in a higher tier. The information processing device 200 therefore corrects the trust value tn of the data trust of a signature present in a lower tier or the trust value tn of the data trust of a signature present in a higher tier following, for example, a security policy of the creator. Figs. 16 and 17 are described next.

In Figs. 16 and 17, the information processing device 200 executes weighting for the trust amount of a WF-type signature present in a higher tier by taking into consideration the variation of the trust value tn of the data trust of a signature present in a lower tier.

The information processing device 200 can thereby facilitate the verification of the variation of the trust value tn of the data trust of the signature present in the lower tier. The information processing device 200 can therefore facilitate verification as to whether the trust value tn of the data trust of a part of signatures present in a lower tier is uniquely low or the trust values tn of the data trust of multiple signatures present in a lower tier are generally low.

In Figs. 16 and 17, the information processing device 200 calculates, for example, an appearance rate pᵢ of the trust amount corresponding to each signature in a group of the trust amounts of signatures under a WF-type signature for each WF-type signature. The information processing device 200 calculates, for example, a normalization entropy S using the calculated appearance rate pᵢ.

For example, the normalization entropy S is S=1+Σᵢ₌₁ⁿ(pᵢ×log(pᵢ)/log(n)). "n" is the quantity of the signatures present under a WF-type signature. "i" is the number of each signature present under the WF-type signature, that is attached thereto for convenience of the description. The base of the logarithm is, for example, 2. For example, the normalization entropy S may also be S=1+min{pᵢ×log(pᵢ)/log(n):i=1, 2,...,n}.

In the example in Fig. 16, the hierarchical relation between the signatures is as depicted in a graph 1600. The signatures S1 to S4 are present under the WF-type signature G1. The trust value, a sum of the trust values, and the trust amount corresponding to the WF-type signature G1 are as depicted in the graph 1600. The trust value, the sum of the trust values, and the trust amount corresponding to each of the signatures S1 to S4 are as depicted in the graph 1600. The size of a key-lock mark in the graph 1600 indicates the degree of the reliability of the signature.

The information processing device 200 calculates, for example, the appearance rate pᵢ that is pᵢ=(4/4) of the trust amount corresponding to each of the signatures in a group of the trust amounts of the signatures S1 to S4 present under the WF-type signature G1. The information processing device 200 calculates the normalization entropy S that is S=1-(4/4)×log(4/4)/log(4)=1 using the calculated appearance rate pᵢ. The information processing device 200 multiplies the trust amount T that is T=Σ(tn)/n=0.33 corresponding to the WF-type signature G1 by the normalization entropy S that is S=1 as a weight to calculate the final value of 0.33. The information processing device 200 stores the weight and the final value to the trust vector DB 1000.

In the example in Fig. 17, the hierarchical relation between the signatures is as depicted in a graph 1700. The signatures S1 to S4 are present under the WF-type signature G1. The trust value, the sum of the trust values, and the trust amount corresponding to the WF-type signature G1 are as depicted in the graph 1700. The trust value, the sum of the trust values, and the trust amount corresponding to each of the signatures S1 to S4 are as depicted in the graph 1700. The size of a key-lock mark in the graph 1700 indicates the degree of the reliability of the signature.

The information processing device 200 calculates, for example, the appearance rate pᵢ that is pᵢ=(3/4) of the trust amount corresponding to each of the signatures S1 to S3 in a group of the trust amounts of the signatures S1 to S4 present under the WF-type signature G1. The information processing device 200 calculates, for example, the appearance rate pᵢ that is pᵢ=(1/4) of the trust amount corresponding to the signature S4 in the group of the trust amounts of the signatures S1 to S4 present under the WF-type signature G1.

The information processing device 200 calculates the normalization entropy S that is S=1-(1/4)×log(1/4)/log(4)=0.75 using the calculated appearance rate pᵢ. The information processing device 200 multiplies the trust amount T that is T=Σ(tn)/n=0.33 corresponding to the WF-type signature G1 by the normalization entropy S that is S=0.75 as the weight to calculate the final value of 0.24. The information processing device 200 stores the weight and the final value to the trust vector DB 1000.

The information processing device 200 can thereby indicate the reliability for the overall multiple signatures present under the WF-type signature using the final value. The information processing device 200 can use the final value to indicate, for example, the difference between the example in Fig. 16 where the overall reliability of the multiple signatures present under the WF-type signature is relatively low and the example in Fig. 17 where the reliability of the part of the multiple signatures present under the WF-type signature is relatively low. The information processing device 200 can enable verification of the variation of the reliability of the multiple signatures present under the WF-type signature, using the final value. The information processing device 200 can therefore enable the verifier to easily verify the reliability of data. Fig .18 is described next.

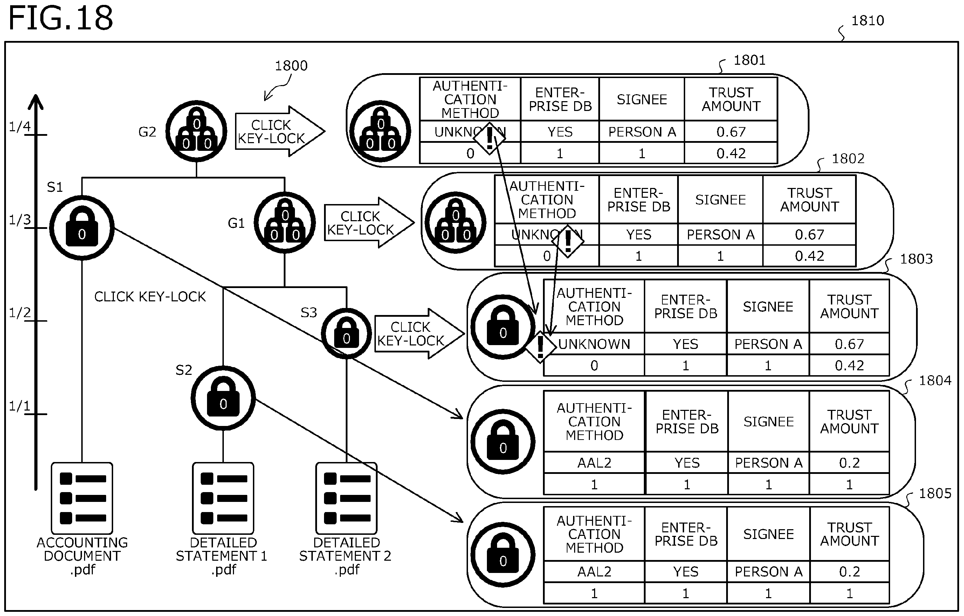

In Fig. 18, the information processing device 200 executes control of causing the user device 302 to display thereon a screen 1810 that includes a graph 1800 depicting the hierarchical relation between WFs. A key-lock mark in the graph 1800 corresponds to a signature. The size of the key-lock mark indicates the degree of the reliability corresponding to the signature. The size of the key-lock mark indicates, for example, the trust amount, the final value, or the like corresponding to the signature. The information processing device 200 can thereby enable the verifier to intuitively know the degree of the reliability corresponding to a signature, using the graph 1800 on the screen 1810.

When a key-lock mark in the graph 1800 is clicked, the information processing device 200 executes control of causing the screen 1810 to display thereon a table of the trust value and the trust amount corresponding to the signature indicated by the key-lock mark. For example, when the key-lock mark indicating the signature G2 is clicked, a table 1801 is displayed. For example, when the key-lock mark indicating the signature G1 is clicked, a table 1802 is displayed. For example, when the key-lock mark indicating the signature S3 is clicked, a table 1803 is displayed. For example, when the key-lock mark indicating the signature S1 is clicked, a table 1804 is displayed. For example, when the key-lock mark indicating the signature S2 is clicked, a table 1805 is displayed. The information processing device 200 can thereby facilitate the verification of the trust values and the trust amounts corresponding the signatures.

When any evaluation item having a relatively low trust value is present in the displayed table, the information processing device 200 executes control of associating the displayed table with the evaluation item to display a "!" mark. When the "!" mark is clicked, the information processing device 200 executes control of causing the screen 1810 to display therein a table corresponding to the signature present in a lower tier, which is the cause of the relatively lower trust value of the evaluation item for which the "!" mark is displayed. The information processing device 200 can thereby let the verifier easily know the signature present under the WF-type signature, that is the cause of the relatively lower trust value by the WF-type signature.

### (Specific Example Summarizing Operation of Information Processing Device 200)

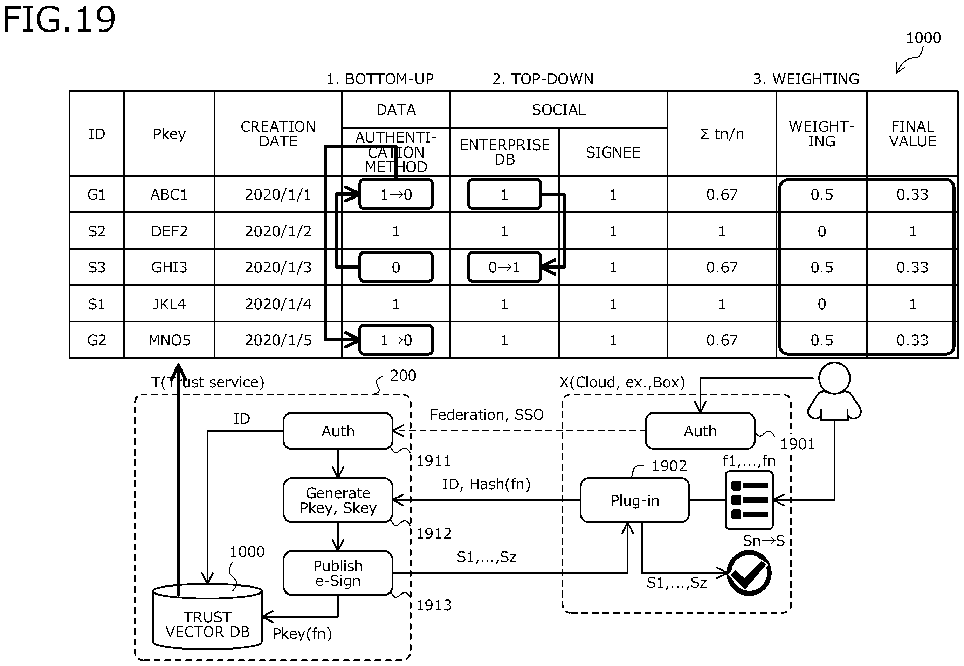

A specific example summarizing operation of the information processing device 200 is described next with reference to Fig. 19.

Fig. 19 is an explanatory diagram depicting a specific example that summarizes the operation of the information processing device 200. In Fig. 19, "X" corresponds to a creator or a cloud environment used by the creator. "T" indicates a trust service and corresponds to the information processing device 200.

The creator accesses an Auth function 1901 of X. The Auth function 1901 transmits Federation and SSO to an Auth function 1911 of T and signs in T. T registers the ID of X that signs in, into a storage device and prepares the trust vector DB 1000 for X.

The creator registers pieces of data f1 to fn into X. A Plug-in function 1902 of X transmits the ID and the hash value of each of the pieces of data f1 to fn, to T. A Generate function 1912 of T generates a Pkey(fi) and a Skey(fi) that are used when a signature to be attached to the piece of data fi is generated, and outputs the Pkey(fi) and the Skey(fi) to a Publish e-Sign function 1913. "i" is i=1 to n. The Pkey is a public key. The Skey is a secret key. The Generate function 1912 of T generates a Pkey(Gj) and a Skey(Gj) that are used when a WF-type signature Gj is generated, and transmits the Pkey(Gj) and the Skey(Gj) to the Publish e-Sign function 1913.

The Publish e-Sign function 1913 generates a signature Si to be attached to a piece of data fi using the Skey(fi). The Publish e-sign function 1913 generates a WF-type signature Gj that aggregates therein the signatures Si, using the Skey(Gj). "j" is j=1 to y. It is assumed that {Si,Gj} is {Si,Gj}=S1 to Sz. "z" is z=n+y. The Publish e-Sign function 1913 stores the Pkey(fi) and the Pkey(Gj) in the trust vector DB 1000 for X, and transmits S1 to Sz, to X. Of S1 to Sz, the Plug-in function 1902 X attaches the final WF-type signature Gj that is Gj=S present in the highest tier, to the pieces of data f1 to fn.

T sets the trust value in the trust vector DB 1000 for X. T corrects the trust value of the data trust in the same manner as that in Fig. 14. T corrects the trust value of the social trust in the same manner as that in Fig. 15. T calculates the average value of the trust values for each signature as the trust amount and stores the average value to the trust vector DB 1000 for X. T calculates the weight and the final value for each signature in the same manner as that in Figs. 16 and 17, and stores the weight and the final value to the trust vector DB 1000 for X.

### (One Example of Use Case)

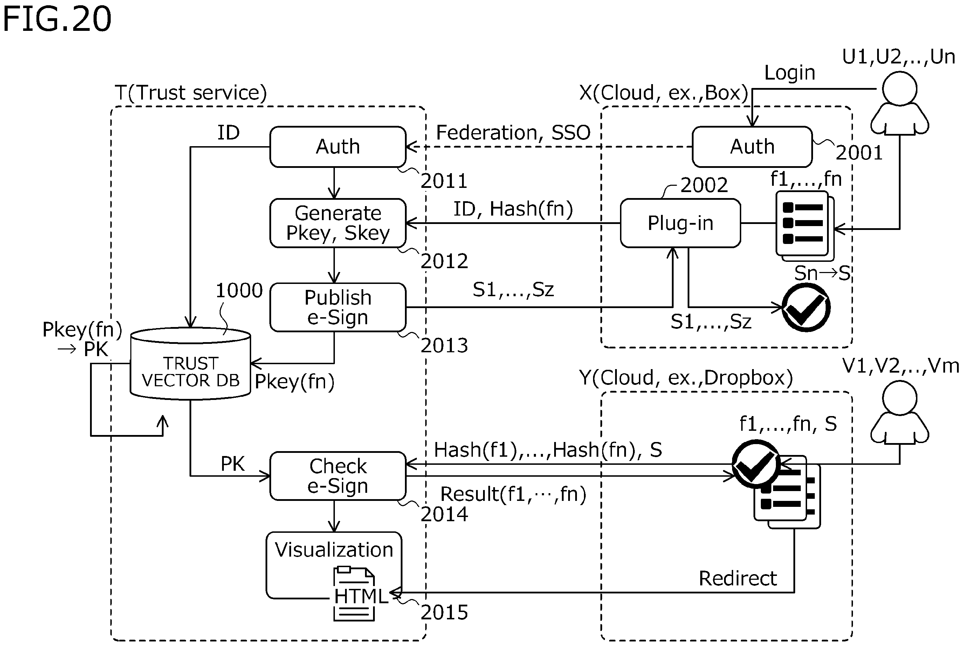

One example of a use case to which the information processing device 200 is applied is described next with reference to Fig. 20.

Fig. 20 is an explanatory diagram depicting one example of a use case to which the information processing device 200 is applied. In Fig. 20, "X" corresponds to creators U1 to Un or a cloud environment used by the creators U1 to Un. "T" denotes a trust service and corresponds to the information processing device 200. "Y" corresponds to verifiers V1 to Vm, or a cloud environment used by the verifiers V1 to Vm.

The creators U1 to Un log into an Auth function 2001 of X. The Auth function 2001 transmits Federation and SSO to an Auth function 2011 of T, and signs in T. T registers into a storage device, the ID of X that signs in, and prepares the trust vector DB 1000 for X.

The creators U1 to Un register the pieces of data f1 to fn into X. A Plug-in function 2002 of X transmits the IDs and the hash values of the pieces of data f1 to fn to T. A Generate function 2012 of T generates a Pkey(fi) and a Skey(fi) that are used when the signature to be attached to the piece of data fi is generated, and outputs the Pkey(fi) and the Skey(fi) to a Publish e-Sign function 2013. "i" is i=1 to n. The Pkey is a public key. The Skey is a secret key. The Generate function 2012 of T generates a Pkey(Gj) and a Skey(Gj) that are used when a WF-type signature Gj is generated, and transmits the Pkey(Gj) and the Skey(Gj) to the Publish e-Sign function 2013.

The Publish e-Sign function 2013 generates a signature Si to be attached to the piece of data fi using the Skey(fi). The Publish e-Sign function 2013 generates a WF-type signature Gj that aggregates therein the signatures Si, using the Skey(Gj). "j" is j=1 to y. It is assumed that {Si,Gj} is {Si,Gj}=S1 to Sz. "z" is z=n+y. The Publish e-Sign function 2013 stores the Pkey(fi) and the Skey(Gj) to the trust vector DB 1000 for X, and transmits S1 to Sz, to X. The Plug-in function 2002 of X attaches the final WF-type signature Gj that is Gj=S present in the highest tier of S1 to Sz, to the pieces of data f1 to fn. The creators U1 to Un provide the pieces of data f1 to fn having the signature S attached thereto, to the verifiers V1 to Vm.

T sets the trust value in the trust vector DB 1000 for X. T corrects the trust value of the data trust in the same manner as that in Fig. 14. T corrects the trust value of the social trust in the same manner as that in Fig. 15. T calculates the average value of the trust values of each of the signatures as the trust amount and stores the average value to the trust vector DB 1000 for X. T calculates the weight and the final value for each signature in the same manner as that in Figs. 16 and 17, and stores the weight and the final value in the trust vector DB 1000 for X.

Y transmits the hash value of the piece of data fi and the WF-type signature S, to T. A Check e-Sign function 2014 of T obtains an authentication key PK that corresponds to the WF-type signature S, verifies the validity of the WF-type signature S, and transmits the verification results Result(f1, ..., fn), to Y. A Visualization function 2015 of T provides a graph depicting the hierarchical relation between the signatures, to Y. Y can thereby verify the reliability of each of the data trust and the social trust based on the verification results and the graph.

### (One Example of Comparison with Conventional Methods)

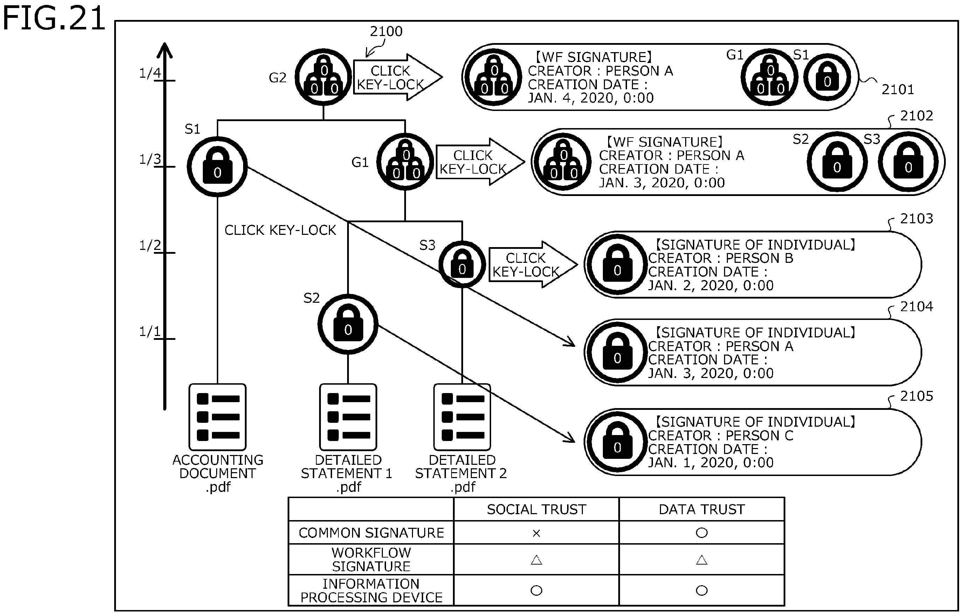

One example where the information processing device 200 is compared with the conventional methods is described next with reference to Fig. 21.

Fig. 21 is an explanatory diagram depicting one example of a comparison with the conventional methods. For example, a conventional method 1 in which a common signature is simply attached to data can be considered. With the conventional method 1, a problem arises in that the social trust cannot be made verifiable. For example, a conventional method 2 in which a WF-type signature aggregating therein signatures is generated can be considered. With the conventional method 2, it can be considered that a screen 2100 is displayed and a verifier is prompted to refer to the signature.

In the screen 2100, windows 2101 to 2105 with which, for example, the creator of the signature and the creation date are referrable, can be displayed. In the windows 2101 and 2102, for example, which signatures the WF-type signature aggregates therein is further referrable.

With the conventional method 2, a problem arises that only a portion of the social trust can be made verifiable. With the conventional method 2, a problem arises in that the information regarding the data trust of the aggregated signatures is lost from the WF-type signature and this causes an increase of the workload necessary for the verification. The verifier sequentially checks the signatures from the one present in a higher tier and, in a case where a problem arises with the reliability of any signature present in a lower tier, the verifier again sequentially checks the signatures from the one present in the higher tier to verify the locus of the responsibility. This causes an increase of the workload.

In contrast, the information processing device 200 can facilitate the verification of the reliability of data from both the perspectives of the data trust and the social trust. The information processing device 200 corrects the trust value of the data trust of a WF-type signature using the trust value of the data trust of a signature present in a lower tier and thereafter can output the trust value to be verifiable by the verifier. The information processing device 200 can therefore enables the reliability from the perspective of data trust to be correctly verifiable when the verifier verifies the WF-type signature.

The information processing device 200 can set the trust value that indicates the reliability from both the data trust and the social trust for each signature, based on the set criteria. The information processing device 200 can therefore enable the reliability of the data to be verifiable from the perspectives of various types of data trust and various types of social trust, not limited to a portion of the social trust. The information processing device 200 can facilitate the verification of the difference in the reliability between the signatures by the trust vector that has the trust value as an element. The information processing device 200 can facilitate the application of the definition of the data trust and the social trust when the definition is changed. The information processing device 200 can calculate the general trust amount and can facilitate the general verification of the reliability of data.

The information processing device 200 can correct the trust value of the data trust or the social trust according to the hierarchical relation between the signatures. The information processing device 200 can therefore change the trust value of the data trust or the social trust to a value that is in line with the actual state. The information processing device 200 can enable the verifier to easily verify correctly the reliability of the data, based on the trust value of the data trust or the social trust.

### (Procedure for Trust Mapping Process)

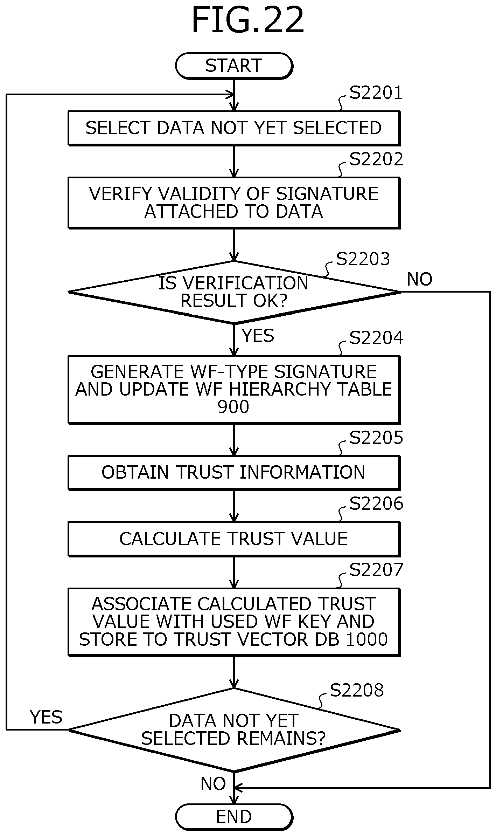

One example of a procedure for a trust mapping process executed by the information processing device 200 is described next with reference to Fig. 22. The trust mapping process is realized by, for example, the CPU 401, a storage area such as the memory 402, the recording medium 405, the network I/F 403, etc. that are depicted in Fig. 4.

Fig. 22 is a flowchart depicting one example of the procedure for the trust mapping process. In Fig. 22, the information processing device 200 selects a piece of data not yet selected, of multiple pieces of data each having a signature attached thereto (step S2201).

The information processing device 200 next verifies the validity of the signature that is attached to the selected piece of data through an authentication agency (step S2202). The information processing device 200 determines whether the verification result is OK (step S2203).

In a case where the information processing device 200 determines that the authentication result is OK (step S2203: YES), the information processing device 200 transitions to the process at step S2204. On the other hand, in the case where the information processing device 200 determines that the authentication result is not OK (step S2203: NO), the information processing device 200 causes the trust mapping process to come to an end.

At step S2204, the information processing device 200 generates a WF-type signature that aggregates therein multiple signatures that are already verified, using a WF key, and updates the WF hierarchy table 900 (step S2204).

The information processing device 200 next obtains trust information that relates to the authentication method, the enterprise DB, the user DB, the signees, etc. (step S2205). The information processing device 200 obtains the criteria for evaluating the trust value based on the evaluation criteria table 800, compares the criteria with the trust information, and thereby calculates the trust value (step S2206).

The information processing device 200 next stores the calculated trust value to the trust vector DB 1000, associating the trust value with the used WF key (step S2207). The information processing device 200 determines whether a piece of data not yet selected of the multiple pieces of data remains (step S2208).

In a case where the information processing device 200 determines that a piece of data not yet selected remains (step S2208: YES), the information processing device 200 returns to the process at step S2201. On the other hand, in a case where the information processing device 200 determines that no piece of data not yet selected remains (step S2208: NO), the information processing device 200 causes the trust mapping process to come to an end.

### (Procedure for Top-Down Update Process)

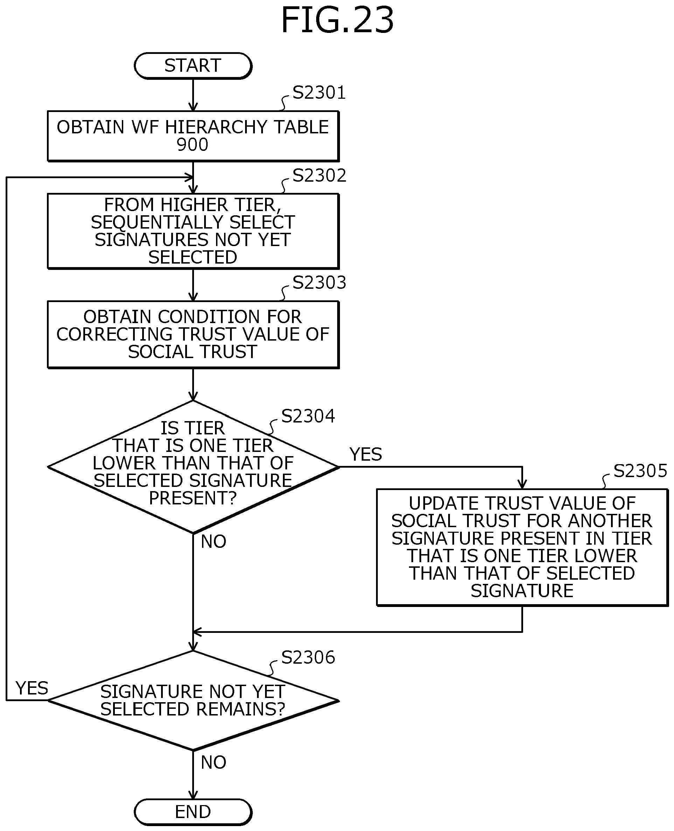

One example of a procedure for a top-down update process executed by the information processing device 200 is described next with reference to Fig. 23. The top-down update process is realized by, for example, the CPU 401, a storage area such as the memory 402, the recording medium 405, the network I/F 403, etc. that are depicted in Fig. 4.

Fig. 23 is a flowchart depicting one example of the procedure for the top-down update process. In Fig. 23, the information processing device 200 obtains the WF hierarchy table 900 (step S2301).

The information processing device 200 next selects the signatures not yet selected, sequentially from a tier on the higher side based on the WF hierarchy table 900 (step S2302). The information processing device 200 obtains the condition for correcting the trust value of the social trust, based on the evaluation criteria table 800 (step S2303).

The information processing device 200 next determines whether a tier that is one tier lower than that of the selected signature is present (step S2304). In a case where the information processing device 200 determines that a tier that is one tier lower is present (step S2304: YES), the information processing device 200 transitions to the process at step S2305. On the other hand, in a case where the information processing device 200 determines that no tier that is one tier lower is present (step S2304: NO), the information processing device 200 transitions to the process at step S2306.

At step S2305, when the obtained condition is satisfied, the information processing device 200 updates the trust value of the social trust for another signature present in the tier that is one tier lower than that of the selected signature, with the trust value of the social trust for the selected signature (step S2305). The information processing device 200 transitions to the process at step S2306.

At step S2306, the information processing device 200 determines whether a signature not yet selected remains (step S2306). In a case where the information processing device 200 determines that a signature not yet selected remains (step S2306: YES), the information processing device 200 returns to the process at step S2302. On the other hand, in a case where the information processing device 200 determines that no signature not yet selected remains (step S2306: NO), the information processing device 200 causes the top-down update process to come to an end.

### (Procedure for Bottom-Up Update Process)

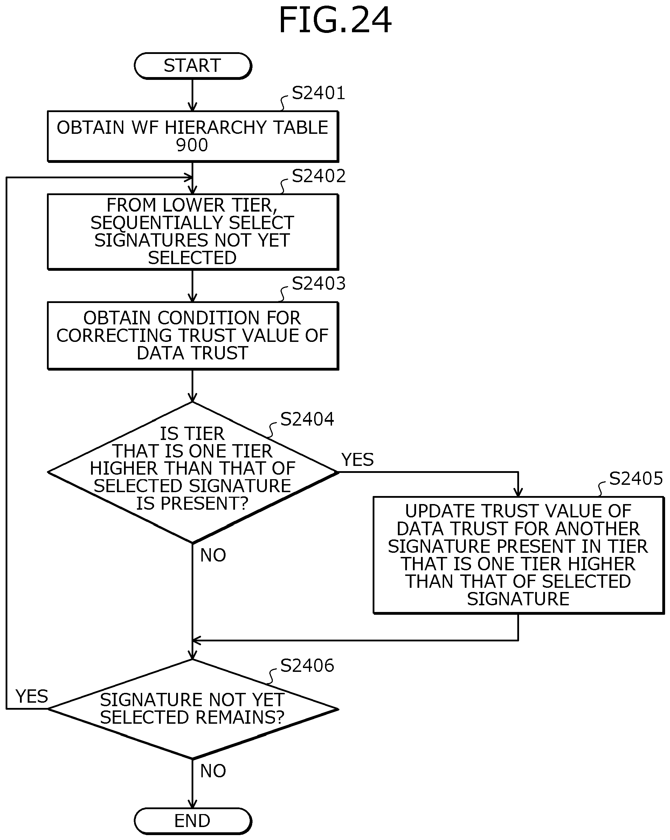

One example of a procedure for a bottom-up update process executed by the information processing device 200 is described next with reference to Fig. 24. The bottom-up update process is realized by, for example, the CPU 401, a storage area such as the memory 402, the recording medium 405, the network I/F 403, etc. that are depicted in Fig. 4.

Fig. 24 is a flowchart depicting one example of the procedure for the bottom-up update process. In Fig. 24, the information processing device 200 obtains the WF hierarchy table 900 (step S2401).

The information processing device 200 next sequentially selects the signatures not yet selected from a tier on the lower side, based on the WF hierarchy table 900 (step S2402). The information processing device 200 obtains the condition for correcting the trust value of the data trust based on the evaluation criteria table 800 (step S2403).

The information processing device 200 next determines whether a tier that is one tier higher than that of the selected signature is present (step S2404). In a case where the information processing device 200 determines that a tier that is one tier higher is present (step S2404: YES), the information processing device 200 transitions to the process at step S2405. On the other hand, in a case where the information processing device 200 determines that no tier that is one tier higher is present (step S2404: NO), the information processing device 200 transitions to the process at step S2406.

At step S2405, when the obtained condition is satisfied, the information processing device 200 updates the trust value of the data trust for another signature present in the tier that is one tier higher than that of the selected signature, with the trust value of the data trust for the selected signature (step S2405). The information processing device 200 transitions to the process at step S2406.

At step S2406, the information processing device 200 determines whether a signature not yet selected remains (step S2406). In a case where the information processing device 200 determines that a signature not yet selected remains (step S2406: YES), the information processing device 200 returns to the process at step S2402. On the other hand, in a case where the information processing device 200 determines that no signature not yet selected remains (step S2406: NO), the information processing device 200 causes the bottom-up update process to come to an end.

### (Procedure for Weighting Process)

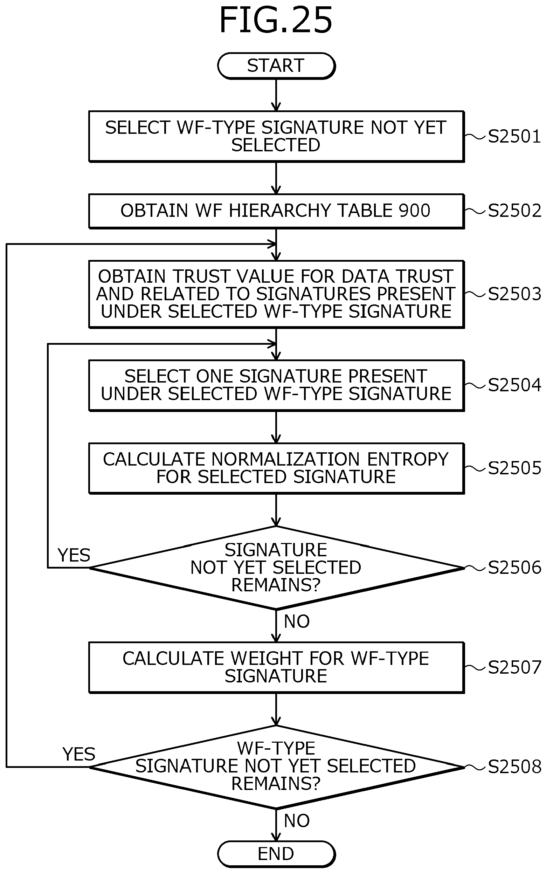

One example of a procedure for a weighting process executed by the information processing device 200 is described next with reference to Fig. 25. The weighting process is realized by, for example, the CPU 401, a storage area such as the memory 402, the recording medium 405, the network I/F 403, etc. that are depicted in Fig. 4.

Fig. 25 is a flowchart depicting one example of the procedure for the weighting process. In Fig. 25, the information processing device 200 selects a WF-type signature not yet selected of multiple WF-type signatures (step S2501).

The information processing device 200 next obtains the WF hierarchy table 900 (step S2502). The information processing device 200 obtains the trust value for the data trust and related to the signatures present under the selected WF-type signature, based on the obtained WF hierarchy table 900 (step S2503).

The information processing device 200 next selects one signature present under the selected WF-type signature, based on the obtained WF hierarchy table 900 (step S2504). The information processing device 200 calculates the normalization entropy for the selected one signature and updates the final value related to this signature (step S2505).

The information processing device 200 next determines whether a signature not yet selected remains under the WF-type signature (step S2506). In a case where the information processing device 200 determines that a signature not yet selected remains (step S2506: YES), the information processing device 200 returns to the process at step S2504. On the other hand, in a case where the information processing device 200 determines that no signature not yet selected remains (step S2506: NO), the information processing device 200 transitions to the process at step S2507.

At step S2507, the information processing device 200 calculates the weight for the WF-type signature, based on the calculated normalization entropy, and updates the final value related to the WF-type signature (step S2507). The information processing device 200 next determines whether a WF-type signature not yet selected remains (step S2508).

In a case where the information processing device 200 determines that a signature not yet selected remains (step S2508: YES), the information processing device 200 returns to the process at step S2503. On the other hand, in a case where the information processing device 200 determines that no signature not yet selected remains (step S2508: NO), the information processing device 200 causes the weighting process to come to an end.

As described above, according to the information processing device 200, the first evaluation value can be obtained, for the evaluation item related to the reliability corresponding to the combined signature that is obtained by aggregating therein multiple signature. According to the information processing device 200, the second evaluation value can be obtained, for the evaluation item related to the reliability corresponding to any one signature of the multiple signatures. According to the information processing device 200, whether the obtained first evaluation value and the obtained second evaluation value differ from each other can be determined. According to the information processing device 200, in a case where it is determined that the obtained evaluation values differ from each other, the control of changing the second evaluation value using the first evaluation value or changing the first evaluation value using the second evaluation value can be executed, according to the hierarchical relation between the combined signature and any one of the signatures, based on the type of the evaluation item. The information processing device 200 can thereby facilitate the verification of the reliability of the data.

According to the information processing device 200, in the case where the type is the type related to the reliability for a social item, the control of changing the second evaluation value can be executed using the first evaluation value. The information processing device 200 can thereby change the evaluation value for the evaluation item of the type related to the reliability for the social item, to a value that is in line with the actual state. The information processing device 200 can therefore enable the reliability of the data to be easily verified correctly by the verifier.

According to the information processing device 200, in a case where the type is a type related to the reliability for the authenticity of the data, the control of changing the first evaluation value can be executed using the second evaluation value. The information processing device 200 can thereby change the evaluation value for the evaluation item of the type related to the reliability for the authenticity of the data, to a value that is in line with the actual state. The information processing device 200 can therefore enable the reliability of the data to be easily verified correctly by the verifier.

According to the information processing device 200, based on the evaluation value for each evaluation item of multiple evaluation items related to the reliability corresponding to each signature of multiple signatures, the general evaluation value related to this reliability can be calculated. According to the information processing device 200, the statistical evaluation value can be calculated based on the calculated general evaluation value. The information processing device 200 can thereby enable the reliability for the overall multiple signatures aggregated in a combined signature, to be easily verified.

According to the information processing device 200, the statistical evaluation value can be calculated in the state where each of the calculated general evaluation values is weighted, based on the appearance rate of each of the general evaluation values in a group of the calculated general evaluation values. The information processing device 200 can thereby enable the reliability for the overall multiple signatures aggregated in the combined signature to be accurately indicated and to be easily verifiable.

According to the information processing device 200, an evaluation item that evaluates the reliability for the social item can be employed based on whether the social item is included in the social item list registered in advance. The information processing device 200 can thereby enable the evaluation value for the evaluation item that evaluates the reliability for the social item, to be changed based on whether the social item is included in the social item list registered in advance.

According to the information processing device 200, the evaluation item evaluating the reliability for the social item can be employed based on the signature method. The information processing device 200 can thereby enable the evaluation value for the evaluation item evaluating the reliability for the social item, to be changed based on the signature method.

According to the information processing device 200, the evaluation item evaluating the reliability for the authenticity of data can be employed based on the signature verification. The information processing device 200 can thereby enable the evaluation value for the evaluation item that evaluates the reliability for the authenticity of data, to be changed based on the signature verification.

The information processing method described in the present embodiment may be implemented by executing a prepared program on a computer such as a personal computer and a workstation. The program is stored on a computer-readable recording medium, read out from the computer-readable medium, and executed by the computer. The recording medium is a hard disk, a flexible disk, a compact disc (CD)-ROM, a magneto optical (MO) disc, and a digital versatile disc (DVD), etc. The program may be distributed through a network such as the Internet.

### EXPLANATIONS OF LETTERS OR NUMERALS

200 information processing device
300 reliability management system
301 creator device
302 user device
310 network
400 bus
401 CPU
402 memory
403 network I/F
404 recording medium I/F
405 recording medium
501, 502 receipt
503 account settlement document
600, 1801 to 1805 table
701, 702 data
710 key management DB
800 evaluation criteria table
900 WF hierarchy table
910, 1300, 1600, 1700, 1800 graph
1000 trust vector DB
1100 trust vector criteria DB
1200 storage unit
1201 obtaining unit
1202 changing unit
1203 calculating unit
1204 output unit
1810, 2100 screen
1901, 1911, 2001, 2011 Auth function
1902, 2002 Plug-in function
1912, 2012 Generate function
1913, 2013 Publish e-Sign function
2014 Check e-Sign function
2015 Visualization function

## Claims

1. An information processing method executed by a computer, the information processing method comprising:
obtaining a first evaluation value for an evaluation item related to reliability corresponding to a combined signature that is obtained by aggregating therein a plurality of signatures, and a second evaluation value for an evaluation item related to reliability corresponding to any one signature of the plurality of signatures; and
executing, when the obtained first evaluation value and the obtained second evaluation value differ from each other, control of changing the second evaluation value using the first evaluation value or changing the first evaluation value using the second evaluation value, according to a hierarchical relation between the combined signature and the any one signature, based on a type of the evaluation item.

2. The information processing method according to claim 1, wherein
the control of changing the second evaluation value using the first evaluation value is executed when the type is related to reliability for a social item.

3. The information processing method according to claim 1 or 2, wherein
the control of changing the first evaluation value using the second evaluation value is executed when the type is related to reliability for authenticity of data.

4. The information processing method according to any one of claims 1 to 3, further comprising
calculating, based on an evaluation value for each evaluation item of a plurality of evaluation items related to reliability corresponding to each signature of the plurality of signatures, a general evaluation value related to the reliability, and calculating a statistical evaluation value based on the calculated general evaluation value.

5. The information processing method according to claim 4, wherein
the statistical evaluation value is calculated in a state where each of the calculated general evaluation values is weighted, based on an appearance rate of each general evaluation value of a group of the calculated general evaluation values.

6. The information processing method according to any one of claims 1 to 5, wherein
the type relates to reliability for a social item, and
the evaluation item evaluates the reliability for the social item based on whether the social item is included in a social item list registered in advance.

7. The information processing method according to any one of claims 1 to 6, wherein
the type relates to reliability for a social item, and
the evaluation item evaluates the reliability for the social item based on a signature method.

8. The information processing method according to any one of claims 1 to 7, wherein
the type relates to reliability for authenticity of data, and
the evaluation item evaluates the reliability for the authenticity of the data.

9. An information processing program that causes a computer to execute a process, the process comprising:
obtaining a first evaluation value for an evaluation item related to reliability corresponding to a combined signature that is obtained by aggregating therein a plurality of signatures, and a second evaluation value for an evaluation item related to reliability corresponding to any one signature of the plurality of signatures; and
executing, when the obtained first evaluation value and the obtained second evaluation value differ from each other, control of changing the second evaluation value using the first evaluation value or changing the first evaluation value using the second evaluation value, according to a hierarchical relation between the combined signature and the any one signature, based on a type of the evaluation item.

10. An information processing device, comprising
a processor configured to:
obtain a first evaluation value for an evaluation item related to reliability corresponding to a combined signature that is obtained by aggregating therein a plurality of signatures, and a second evaluation value for an evaluation item related to reliability corresponding to any one signature of the plurality of signatures; and
execute, when the obtained first evaluation value and the obtained second evaluation value differ from each other, control of changing the second evaluation value using the first evaluation value or changing the first evaluation value using the second evaluation value, according to a hierarchical relation between the combined signature and the any one signature, based on a type of the evaluation item.
